# EUROPÄISCHE PATENTANMELDUNG

(11) **EP 4 660 735 A1**
(43) Veröffentlichungstag der Anmeldung: **10.12.2025**
(21) Anmeldenummer: 24179954.3
(22) Anmeldetag: 04.06.2024
(51) Int. Cl.: G05D 1/241, G05D 1/242, G05D 1/648

(54) **REINIGUNGSGERÄT UND VERFAHREN ZUM BETREIBEN EINES REINIGUNGSGERÄTS**

(71) Anmelder: Vorwerk & Co. Interholding GmbH, 42275 Wuppertal (DE)
(72) Erfinder: WENJIE, Yan, 40549 Düsseldorf (DE); BIROL, Ceylan, 44359 Dortmund (DE); WIEDMANN, Peter, 40211 Düsseldorf (DE); BRÜNING, Peter, 40822 Mettmann (DE); LESSEL, Thomas, 42551 Velbert (DE)
(74) Vertreter: Von Rohr Patentanwälte Partnerschaft mbB

(57) **Zusammenfassung**

Es werden ein selbstfahrendes Reinigungsgerät und ein Verfahren zum Betreiben eines selbstfahrenden Reinigungsgeräts zur Reinigung einer Reinigungsfläche vorgeschlagen, wobei während der Reinigung ein verschiebbares Verschiebeobjekt auf der Reinigungsfläche erkannt wird und das Reinigungsgerät bei einem Verschiebeobjekt automatisch ein Verschiebemanöver durchführt, wobei zunächst eine Zielposition festgelegt und das Verschiebeobjekt mittels des Reinigungsgeräts zu der Zielposition verschoben wird.

## Beschreibung

Die vorliegende Erfindung betrifft ein Verfahren zum Betreiben eines Reinigungsgeräts gemäß dem Oberbegriff des Anspruchs 1 und ein Reinigungsgerät gemäß dem Oberbegriff des Anspruchs 15.

Aus dem Stand der Technik sind selbsttätig fortbewegende bzw. selbstfahrende Reinigungsgeräte insbesondere als (teil-)autonome Staubsaugerroboter, Wischroboter oder Saug-Wisch-Roboter zur Reinigung von Flächen, wie Fußböden, bekannt.

Derartige Reinigungsgeräte navigieren üblicherweise selbsttätig bzw. autonom in einer bekannten bzw. kartierten oder in einer unbekannten Umgebung.

Problematisch sind hierbei insbesondere Gegenstände bzw. Objekte, die temporär auf der zu reinigenden Fläche - im Folgenden als Reinigungsfläche bezeichnet - liegen und sowohl die Navigation auf der Reinigungsfläche als auch die Reinigung der Reinigungsfläche erschweren bzw. einschränken. Hierbei kann es sich beispielsweise um Kleidung, Spielzeug, Einkaufstaschen oder dergleichen handeln.

Üblicherweise sind selbstfahrende Reinigungsgeräte dazu ausgebildet, derartige Objekte automatisch zu erkennen und diese bei der Reinigung der Reinigungsfläche zu umfahren. Nachteilig hieran ist, dass die Fläche unterhalb des Objektes und unmittelbar um das Objekt herum nicht gereinigt wird.

Der vorliegenden Erfindung liegt die Aufgabe zugrunde, ein verbessertes Verfahren zum Betreiben eines Reinigungsgeräts sowie ein verbessertes Reinigungsgerät anzugeben, vorzugsweise wobei eine zuverlässige, gründliche und/oder effiziente Reinigung erzielt und/oder eine verbesserte und/oder effiziente Handhabung von auf der Reinigungsfläche befindlichen Objekt ermöglicht werden/wird.

Die der Erfindung zugrundeliegende Aufgabe wird durch das Verfahren gemäß Anspruch 1 oder das Reinigungsgerät gemäß Anspruch 15 gelöst. Vorteilhafte Weiterbildungen sind Gegenstand der Unteransprüche.

Die vorliegende Erfindung betrifft ein vorzugsweise computerimplementiertes Verfahren zum Betreiben eines Reinigungsgeräts. Vorzugsweise wird bzw. werden das vorschlagsgemäße Verfahren, insbesondere einzelne oder alle Verfahrensschritte des vorschlagsgemäßen Verfahrens, mittels des Reinigungsgeräts automatisch bzw. selbsttätig durchgeführt, insbesondere durch entsprechende Mittel zur Datenverarbeitung und Steuerung des Reinigungsgeräts, wie eine Datenverarbeitungseinrichtung und/oder eine Steuereinrichtung. Es ist aber auch möglich, dass einzelne Verfahrensschritte mittels eines Kommunikationsgeräts und/oder durch eine Eingabe über eine Benutzerschnittstelle durchgeführt oder initiiert werden.

Ein Reinigungsgerät im Sinne der vorliegenden Erfindung ist vorzugsweise ein (teil- )autonomer bzw. selbstfahrender Staubsaugerroboter, Wischroboter oder Saug-Wisch-Roboter. Insbesondere ist ein Reinigungsgerät im Sinne der vorliegenden Erfindung dazu ausgebildet, während eines Reinigungsvorgangs eine Reinigungsfläche selbsttätig bzw. (teil-)autonom zu reinigen. Es kann sich bei dem Reinigungsgerät im Sinne der vorliegenden Erfindung aber auch um ein sonstiges Gerät zur Reinigung, Bearbeitung und/oder Pflege von Flächen, insbesondere Fußböden, handeln. Beispielsweise sind auch Poliergeräte bzw. -roboter, Fensterputzgeräte bzw. - roboter oder Rasenmähgeräte bzw. -roboter grundsätzlich als Reinigungsgeräte im Sinne der vorliegenden Erfindung zu verstehen.

Vorzugsweise ist ein Reinigungsgerät im Sinne der vorliegenden Erfindung dazu ausgebildet, autonom in einer Umgebung zu navigieren. Zu diesem Zweck weist ein Reinigungsgerät üblicherweise eine Navigationseinrichtung, eine Datenverarbeitungseinrichtung und/oder eine Steuereinrichtung auf.

Bei dem vorschlagsgemäßen Verfahren zum Betreiben eines selbstfahrenden Reinigungsgeräts navigiert das Reinigungsgerät insbesondere mittels der Navigationseinrichtung, der Datenverarbeitungseinrichtung und/oder der Steuereinrichtung autonom in einer bekannten oder unbekannten Umgebung, wobei insbesondere während der Reinigung bzw. der Durchführung eines Reinigungsvorgangs ein Objekt auf der Reinigungsfläche, insbesondere auf dem (geplanten) Fahrweg des Reinigungsgeräts, erkannt wird. Vorzugsweise erfolgt die Objekterkennung während sich das Reinigungsgerät auf der Reinigungsfläche bewegt bzw. während die Reinigungsfläche gereinigt wird. Generell es ist aber auch möglich, dass das Objekt bei stillstehendem, beispielsweise an einer Basisstation angeschlossenem, Reinigungsgerät erkannt wird.

Das vorschlagsgemäße Verfahren zeichnet sich dadurch aus, dass insbesondere während der Reinigung bzw. während der Durchführung des Reinigungsvorgangs ein verschiebbares bzw. zu verschiebendes Objekt - im Folgenden als Verschiebeobjekt bezeichnet - auf der Reinigungsfläche, insbesondere auf dem (geplanten) Fahrweg, erkannt bzw. als solches identifiziert wird. Anschließend bzw. bei einem Verschiebeobjekt, insbesondere für den Fall, dass sich das Verschiebeobjekt auf dem Fahrweg des Reinigungsgeräts und/oder in einem noch nicht gereinigten bzw. im zu reinigenden Bereich der Reinigungsfläche befindet, wird von dem Reinigungsgerät automatisch zumindest temporär ein Verschiebemanöver durchgeführt, wobei zunächst bzw. vor Durchführung des Verschiebemanövers eine Zielposition für das Verschiebeobjekt festgelegt und anschließend bzw. nach Festlegung der Zielposition das Verschiebeobjekt mittels des Reinigungsgeräts zu der Zielposition verschoben wird.

Das vorschlagsgemäße Verfahren ermöglicht somit eine verbesserte Handhabung von Verschiebeobjekten bzw. von Objekten, die nicht zwingend umfahren werden müssen. Dadurch, dass das Verschiebeobjekt zu einer zuvor bestimmten Zielposition verschoben wird, wird eine besonders effiziente Handhabung von verschiebbaren bzw. zu verschiebenden Objekten ermöglicht.

Vorzugsweise werden/wird bei Erkennen eines Verschiebeobjekts bzw. (unmittelbar) vor Durchführung des Verschiebemanövers die aktuelle Position des Verschiebeobjekts auf der Reinigungsfläche als Ausgangsposition und die (festgelegte/ausgewählte) Zielposition elektronisch gespeichert, insbesondere in einem (Daten-)Speicher des Reinigungsgeräts.

Auf diese Weise kann das Verschiebemanöver und die anschließende Reinigung der Reinigungsfläche im Bereich der Ausgangsposition besonders effizient durchgeführt werden, wie im Folgenden noch näher erläutert wird.

Das Festlegen bzw. die Identifikation einer Zielposition erfolgt vorzugsweise anhand eines oder mehrerer vordefinierter Kriterien.

Gemäß einer bevorzugten Verfahrensvariante wird die Reinigungsfläche während der Reinigung (automatisch) in einen mittels des Reinigungsgeräts bzw. während des aktuellen Reinigungsvorgangs bereits gereinigten Bereich und einen mittels des Reinigungsgeräts bzw. während des aktuellen Reinigungsvorgangs noch nicht gereinigten bzw. zu reinigenden Bereich unterteilt, beispielsweise in dem die zurückgelegte Strecke des Reinigungsgeräts und/oder mehrere Positionen des Reinigungsgeräts während der Reinigung elektronisch gespeichert werden.

Es ist bevorzugt, dass die Zielposition für das Verschiebeobjekt ausschließlich oder vorrangig im gereinigten Bereich festgelegt wird. Auf diese Weise wird verhindert, dass das Verschiebeobjekt mehrfach verschoben werden muss, um die Reinigungsfläche vollständig bzw. auch den Bereich der Zielposition zu reinigen.

Vorzugsweise wird ausschließlich bzw. vorrangig als Zielposition eine Position auf der Reinigungsfläche festgelegt, die einen vordefinierten Mindestabstand zu einem Hindernis, wie einer Wand oder dergleichen, aufweist und/oder die in einem vordefinierten Radius um die Zielposition herum frei von Hindernissen ist. Auf diese Weise wird gewährleistet, dass das Reinigungsgerät an bzw. im Bereich der Zielposition gut navigieren und optional ein Korrektur- bzw. weiteres Verschiebemanöver durchführen kann.

Bei mehreren ermittelten/möglichen Zielpositionen ist vorgesehen, dass diejenige Zielposition festgelegt/ausgewählt wird, die den geringsten Abstand zur Ausgangsposition aufweist. Einerseits wird auf diese Weise die zeitliche Verzögerung des Reinigungsvorgangs durch das Verschiebemanöver verringert. Andererseits wird die Nutzerfreundlichkeit erhöht, da verschobene Verschiebeobjekte nicht zu weit von der Ausgangsposition vorzufinden sind.

Optional können ein oder mehrere mögliche Zielpositionen durch einen Nutzer bzw. eine Nutzereingabe, beispielsweise über ein Kommunikationsgerät, wie ein Smartphone, vorgegeben sein. Insbesondere kann ein Nutzer eine Sammelstelle auf der Reinigungsfläche definieren, zu der bevorzugt Verschiebeobjekte verschoben werden sollen, beispielsweise wenn sich diese in einem vordefinierten Abstand zu der Sammelstelle befinden.

Zusätzlich oder alternativ können ein oder mehrere Sperrbereiche durch einen Nutzer bzw. eine Nutzereingabe vorgegeben werden, in denen kein Verschiebemanöver durchgeführt und/oder in denen keine Zielposition festgelegt wird und/oder in denen nur innerhalb eines vordefinierten Zeitraums ein Verschiebemanöver durchgeführt und/oder eine Zielposition festgelegt werden darf.

Sofern insbesondere anhand der vordefinierten Kriterien keine Zielposition für das Verschiebeobjekt festlegbar ist, wird das Verschiebeobjekt vorzugsweise automatisch umfahren. Alternativ kann in diesem Fall eine Mitteilung mit einer Aufforderung an einen Nutzer ergehen, eine Zielposition (manuell) festzulegen, beispielsweise mittels des Kommunikationsgeräts.

Die Bestimmung, ob ein (detektiertes) Objekt ein Verschiebeobjekt ist, erfolgt vorzugsweise automatisch, insbesondere mittels der Datenverarbeitungseinrichtung des Reinigungsgeräts. Zusätzlich oder alternativ kann die Bestimmung aber auch durch eine Nutzereingabe erfolgen oder verifiziert werden.

Vorzugsweise erfolgt die Bestimmung, ob ein Objekt ein Verschiebeobjekt ist, mit einem Abstand zwischen dem Reinigungsgerät und dem Objekt. Insbesondere kann das Objekt mittels des Reinigungsgeräts, insbesondere eines oder mehrerer Sensoren des Reinigungsgeräts, beabstandet erfasst und basierend auf den Sensordaten bzw. mittels der Datenverarbeitungseinrichtung bestimmt werden, ob das Objekt ein Verschiebeobjekt ist. Hierdurch wird eine besonders effiziente Objekthandhabung ermöglicht, bei der das Reinigungsgerät bereits auf Entfernung entscheiden kann, ob es dem Objekt ausweicht oder es verschiebt.

Das automatische Erkennen/Bestimmen eines Verschiebeobjekts kann durch Geometrieanalyse des Objekts erfolgen und beispielsweise auf einem Objektparameter, insbesondere der ermittelten Größe des Objekts, basieren, wobei ein Verschieben nur dann eingeleitet wird bzw. erfolgt, wenn der Objektparameter bzw. die ermittelte Objektgröße unterhalb eines vorbestimmten Schwellwerts und/oder oberhalb eines vorbestimmten Schwellwerts liegt bzw. das Objekt nicht zu groß und/oder nicht zu klein ist. Hierdurch wird auf besonders einfache Weise eine (erste/grobe) Objektbestimmung ermöglicht. Zu große Objekte sind üblicherweise zu schwer, um verschoben zu werden, während zu kleine Objekte üblicherweise aufzunehmende Sauggut sind.

Für eine (zweite/genauere) Objektbestimmung kann auch vorgesehen sein, dass das Objekt (automatisch) identifiziert bzw. klassifiziert wird, beispielsweise KIgestützt. Auf Basis dieser Identifizierung bzw. Klassifikation wird dann bestimmt/erkannt, ob es sich bei dem Objekt um ein Verschiebeobjekt handelt.

Vorzugsweise ist in einem Speicher oder einer Datenbank eine Liste mit verschiebbaren und/oder nicht verschiebbaren Objekten und/oder Objektklassen hinterlegt, auf die das Reinigungsgerät zugreifen kann. In einer solchen Liste könnten beispielsweise Möbel, wie Stühle, als nicht verschiebbar und Kleidung, wie Socken, als verschiebbar gelistet sein.

Wie bereits erläutert, kann alternativ oder zusätzlich eine Nutzereingabe vorgesehen sein, um ein Verschiebeobjekt zu erkennen/bestimmen, beispielsweise wenn die automatische Erkennung/Bestimmung fehlschlägt bzw. eine zu hohe Unsicherheit aufweist. Vorzugsweise ergeht in diesem Fall über eine Benutzerschnittstelle, insbesondere des Kommunikationsgeräts, eine Aufforderung zur Bestimmung des Objekts. Optional kann die Mitteilung ein vom Reinigungsgerät aufgenommenes Bild des Objekts enthalten.

Zusätzlich oder alternativ kann ein Verschiebeobjekt mechanisch und/oder durch Berührung erkannt/bestimmt werden. Beispielsweise kann das Reinigungsgerät einen mechanischen Sensor bzw. Stoßfänger aufweisen, mit dem bestimmt werden kann, ob es sich bei dem Objekt um ein Verschiebeobjekt handelt, wenn das Reinigungsgerät gegen das Objekt fährt.

Bei einer derartigen Verfahrensvariante wird das Objekt vorzugsweise dann als Verschiebeobjekt bestimmt, wenn der mechanische Sensor bzw. Stoßfänger nicht auslöst, wenn das Reinigungsgerät (insbesondere mit einer vorbestimmten Geschwindigkeit) gegen das Objekt fährt.

Wenn der mechanische Sensor bzw. Stoßfänger hingegen auslöst, wird das Objekt vorzugsweise als nicht verschiebbar bzw. als kein Verschiebeobjekt bestimmt und/oder ein Umfahren des Objekts eingeleitet. Ist das Objekt zu schwer, um verschoben zu werden, löst entsprechend der mechanische Sensor bzw. Stoßfänger aus. Hierdurch wird in einfacher Weise eine Objektbestimmung basierend auf dem Gewicht des Objekts erzielt.

Wie bereits erläutert, wird das Verschiebemanöver erst dann eingeleitet, wenn ein Verschiebeobjekt als solches erkannt, die Ausgangsposition des Verschiebeobjekts elektronisch gespeichert und eine Zielposition für das Verschiebeobjekt festgelegt wird.

Das anschließend durchzuführende Verschiebemanöver ist vorzugsweise mehrschrittig ausgebildet.

Es ist bevorzugt, dass sich das Reinigungsgerät zunächst bzw. in einem ersten Schritt derart relativ zum Verschiebeobjekt ausrichtet, dass das Verschiebeobjekt durch eine geradlinige Bewegung bzw. entlang eine geradlinigen, insbesondere hindernisfreien, Trajektorie von der Ausgangsposition zur Zielposition verschoben werden kann.

Besonders bevorzugt wird automatisch eine Vororientierungsposition für das Reinigungsgerät berechnet/definiert, vorzugsweise wobei die Vororientierungsposition auf der durch die Ausgangsposition und der Zielposition gebildeten Geraden liegt und/oder wobei die Ausgangsposition zwischen der Vororientierungsposition und der Zielposition liegt.

Anschließend bzw. nach Festlegen der Vororientierungsposition nimmt das Reinigungsgerät vorzugsweise automatisch die Vororientierungsposition ein.

Vorzugsweise wird bei der Vororientierung des Reinigungsgeräts bzw. der Ausrichtung des Reinigungsgeräts relativ zum Verschiebeobjekt die Geometrie des Verschiebeobjekts berücksichtigt.

Insbesondere positioniert sich das Reinigungsgerät mit der Vorderseite des Reinigungsgeräts mittig zum Verschiebeobjekt, vorzugsweise wobei die (geometrische) Mitte der Vorderseite des Reinigungsgeräts, die (geometrische) Mitte des Verschiebeobjekts bzw. der (geometrische) Schwerpunkt des Verschiebeobjekts und die (festgelegte) Zielposition auf einer Geraden liegen.

Auf diese Weise wird das Risiko verringert, dass sich das Verschiebeobjekt beim Verschieben zur Zielposition (ungewollt) relativ zum Reinigungsgerät bewegt bzw. von der (geplanten) Trajektorie abkommt.

Unter dem Begriff "Position" im Sinne der vorliegenden Erfindung ist vorzugsweise eine mathematische Angabe für die Verortung des Reinigungsgeräts und/oder des Verschiebeobjekts zu verstehen. Vorzugsweise wird die Position anhand von Koordinaten eines Koordinatensystems mit einem Koordinatenursprung, beispielweise mit der Position einer Basisposition des Reinigungsgeräts und/oder mit einer Startposition des Reinigungsgeräts als Koordinatenursprung, beschrieben. Besonders bevorzugt wird als Koordinatensystem das kartesische Koordinatensystem verwendet, wobei die Position durch die Abstände zum Koordinatenursprung entlang der Koordinatenrichtungen X, Y und optional Z angegeben wird. Es ist jedoch auch möglich, die Position des Reinigungsgeräts und/oder des Verschiebeobjekts anhand eines anderen Koordinatensystems anzugeben.

Unter dem Begriff "Vororientierungsposition" im Sinne der vorliegenden Erfindung ist vorzugsweise diejenige Position des Reinigungsgeräts zu verstehen, die das Reinigungsgerät unmittelbar zum Beginn des Verschiebemanövers einnimmt und/oder die zusammen mit der (festgelegten) Zielposition des Verschiebeobjekts und der Ausgangsposition des Verschiebeobjekts bzw. der (geometrischen) Mitte und/oder dem (geometrischen) Schwerpunkt des Verschiebeobjekts eine Gerade bzw. geradlinige Trajektorie bildet.

Vorzugsweise wird als Vororientierungsposition eine Position festgelegt, die einen vordefinierten Mindestabstand zu einem Hindernis aufweist und/oder die in einem vordefinierten Radius um die Vororientierungsposition frei von Hindernissen ist.

Wenn keine Vororientierungsposition festlegbar ist, wird vorzugsweise kein Verschiebemanöver eingeleitet bzw. das Verschiebemanöver abgebrochen, vorzugsweise wobei optional eine entsprechende Mitteilung an einen Nutzer über die Benutzerschnittstelle bzw. das Kommunikationsgerät ergeht.

Ausgehend von der Vororientierungsposition bzw. während des Verschiebemanövers wird das Verschiebeobjekt entlang der (geplanten) Trajektorie optional mittels mehrere Verschiebevorgänge bzw. mehrere (Vorwärts- und Rückwärts-)Bewegungen von der Ausgangsposition zur festgelegten Zielposition verschoben.

Während des Verschiebemanövers wird vorzugsweise kontinuierlich mittels des Reinigungsgeräts überwacht, ob die aktuelle Position bzw. Istposition des Verschiebeobjekts von der (geplanten) Trajektorie abweicht, vorzugsweise wobei bei Erreichen oder Überschreiten eines vordefinierten Grenzwerts der Abweichung zwischen der Istposition des Verschiebeobjekts und der (geplanten) Trajektorie eine neue Vororientierungsposition bestimmt wird.

Insbesondere positioniert sich bzw. richtet sich das Reinigungsgerät bei Erreichen oder Überschreiten eines vordefinierten Grenzwerts der Abweichung zwischen der Istposition des Verschiebeobjekts und der Trajektorie derart erneut zum Verschiebeobjekt aus, dass das Verschiebeobjekt durch eine geradlinige Bewegung bzw. entlang einer neuen geradlinigen, insbesondere hindernisfreien, Trajektorie von der Istposition zur Zielposition verschoben kann.

Es ist folglich vorgesehen, während des Verschiebemanövers ggf. eine Korrektur vorzunehmen. Auf diese Weise wird ein besonders effizientes Verschieben des Verschiebeobjekts von der Ausgangsposition zur Zielposition ermöglicht oder unterstützt.

Nach Erreichen der Zielposition fährt das Reinigungsgerät vorzugweise rückwärts bzw. entlang der zurückgelegten Strecke/Trajektorie zurück zur Ausgangsposition. Vorzugsweise wird anschließend bzw. nach Durchführung des Verschiebemanövers der Bereich der Ausgangsposition gereinigt und/oder der Reinigungsvorgang an der elektronisch gespeicherten Ausgangsposition fortgesetzt.

Gemäß einer bevorzugten Verfahrensvarianten wird nach Reinigung der Reinigungsfläche im Bereich der Ausgangsposition das Verschiebeobjekt von der Zielposition zurück zur Ausgangsposition verschoben, vorzugsweise mittels des zuvor beschriebenen Verschiebemanövers. Ein Nutzer wird bei einer derartigen Verfahrensvariante folglich nach Beendigung des Reinigungsvorgangs Verschiebeobjekte an derselben Position wiederfinden wie vor der Reinigung.

Für das Verschiebemanöver wird vorzugsweise der Reinigungsvorgang bzw. die Reinigung der Reinigungsfläche unterbrochen und nach Abschluss des Verschiebemanövers bzw. nach Verschieben des Verschiebeobjekts zu der Zielposition fortgesetzt.

Insbesondere wird beim Verschiebemanöver bzw. beim Verschieben des Verschiebeobjekts ein Gebläse des Reinigungsgeräts und/oder eine Reinigungswalze des Reinigungsgeräts deaktiviert.

Es sind jedoch auch Verfahrensvarianten möglich, bei denen insbesondere in Abhängigkeit von der Art des Verschiebeobjekts die Reinigung der Reinigungsfläche während des Verschiebemanövers, insbesondere beim Verschieben des Verschiebeobjekts, fortgesetzt wird. Beispielsweise kann bei einer ersten Gruppe von Verschiebeobjekten, wie Kleidungsstücken, ein Deaktivieren des Gebläses und/oder der Reinigungswalze vorgesehen sein, wobei bei einer zweiten Gruppe von Verschiebeobjekten, wie Taschen und/oder Schuhen, das Gebläse und/oder die Reinigungswalze nicht deaktiviert wird.

Optional wird beim Verschiebemanöver bzw. beim Verschieben des Verschiebeobjekts ein Verschiebeteil bzw. ein Stoßfänger des Reinigungsgeräts (automatisch) abgesenkt, um das Verschiebeobjekt mittels des Verschiebeteils bzw. des Stoßfängers zu verschieben. Auf diese Weise wird die Gefahr eines (ungewollten) Überfahrens bzw. Aufnehmens/Aufsaugens des Verschiebeobjekts reduziert.

Zusammenfassend zeichnet sich das vorschlagsgemäße Verfahren durch mindestens einen der nachfolgend aufgelisteten Verfahrensschritte aus, die grundsätzlich unabhängig voneinander, aber auch in beliebiger Kombination bzw. Reihenfolge realisiert werden können:
- Erkennen/Bestimmen, insbesondere während der Reinigung der Reinigungsfläche, eines verschiebbaren bzw. zu verschiebenden Verschiebeobjekts auf der Reinigungsfläche, vorzugsweise automatisch bzw. mittels der Navigationseinrichtung des Reinigungsgeräts;
- Elektronisches Speichern der aktuellen Position des Verschiebeobjekts als Ausgangsposition, insbesondere in einem (Daten-)Speicher des Reinigungsgeräts;
- Festlegen/Auswählen einer Zielposition, vorzugsweise wobei die Zielposition im bereits gereinigten Bereich der Reinigungsfläche liegt und/oder einen vordefinierten Mindestabstand zu einem Hindernis aufweist und/oder in einem vordefinierten Radius frei von Hindernissen ist;
- Bestimmen einer Vororientierungsposition für das Reinigungsgerät, wobei die Vororientierungsposition, die Ausgangsposition und die Zielposition eine gerade bzw. geradlinige, insbesondere hindernisfreien, Trajektorie bilden und/oder wobei die Vororientierungsposition einen vordefinierten Mindestabstand zu einem Hindernis aufweist und/oder in einem vordefinierten Radius frei von Hindernissen ist;
- Unterbrechen des Reinigungsvorgangs bzw. der Reinigung der Reinigungsfläche, vorzugsweise wobei das Gebläse und/oder die Reinigungswälze deaktiviert werden/wird;
- Einnehmen der Vororientierungsposition und/oder Positionieren/Ausrichten des Reinigungsgeräts relativ zum Verschiebeobjekt, vorzugsweise zwar derart, dass das Verschiebeobjekt durch eine geradlinige Bewegung bzw. entlang eine geradlinigen, insbesondere hindernisfreien, Trajektorie von der Ausgangsposition zur Zielposition verschoben werden kann;
- Absenken des Verschiebeteils bzw. Stoßfängers;
- Verschieben des Verschiebeobjekts von der Ausgangsposition zur Zielposition entlang der (geplanten) Trajektorie, wobei insbesondere kontinuierlich und/oder in Intervallen überwacht wird, ob die Istposition des Verschiebeobjekts von der (geplanten) Trajektorie abweicht, und/oder wobei sich das Reinigungsgerät bei Erreichen oder Überschreiten eines vordefinierten Grenzwertes der Abweichung zwischen der Istposition des Verschiebeobjekts und der (geplanten) Trajektorie erneut derart zum Verschiebeobjekt positioniert/ausrichtet, dass das Verschiebeobjekt durch eine geradlinige Bewegung bzw. entlang eine neuen, geradlinigen, insbesondere hindernisfreien, Trajektorie von der Istposition zur Zielposition verschoben werden kann;
- Anheben des Verschiebeteils bzw. Stoßfängers;
- Aktivieren des Gebläses und/oder der Reinigungswalze;
- Fahren des Reinigungsgeräts insbesondere rückwärts bzw. entlang der (zurückgelegten) Strecke/Trajektorie zurück zur Ausgangsposition;
- Reinigen der Reinigungsfläche im Bereich der Ausgangsposition;
- Verschieben des Verschiebeobjekts von der Zielposition zurück zur (elektronisch gespeicherten) Ausgangsposition;
- Fortführung des Reinigungsvorgangs an der Ausgangsposition.

Das vorschlagsgemäße Verfahren ermöglicht folglich auf besonders einfache Weise, insbesondere ohne zusätzliche Sensorik, eine effiziente Handhabung von Objekten auf der Reinigungsfläche und verbessert das Reinigungsergebnis.

Das vorschlagsgemäße Reinigungsgerät ist zur Durchführung des vorschlagsgemäßen Verfahrens ausgebildet. Auf diese Weise werden entsprechende Vorteile realisiert.

Die vorliegende Erfindung betrifft darüber hinaus ein Computerprogrammprodukt, umfassend Befehle, die zur Ausführung des Programms durch einen Computer bzw. durch das Reinigungsgerät diesen bzw. dieses veranlassen, dass hierin beschriebene Verfahren oder einzelne Verfahrensschritte auszuführen.

Schließlich betrifft die vorliegende Erfindung ein computerlesbares Speichermedium, umfassend das Computerprogrammprodukt und/oder Befehle, die bei der Ausführung durch einen Computer bzw. das Reinigungsgerät diesen bzw. dieses veranlassen, dass hierin beschriebene Verfahren und/oder einzelne Verfahrensschritte auszuführen.

Die vorgenannten Aspekte, Merkmale und/oder Verfahrensschritte bzw. -varianten der vorliegenden Erfindung sowie die sich aus den Ansprüchen und der nachfolgenden Beschreibung ergebenden Aspekte, Merkmale und Verfahrensschritte bzw. -varianten der vorliegenden Erfindung können grundsätzlich unabhängig voneinander, aber auch in beliebiger Kombination bzw. Reihenfolge realisiert werden.

Weitere Aspekte, Vorteile, Merkmale, Eigenschaften sowie vorteilhafte Weiterbildungen der vorliegenden Erfindung ergeben sich aus den Ansprüchen und der nachfolgenden Beschreibung einer bevorzugten Ausführungsform anhand der Figuren. Es zeigen in schematischer, nicht maßstabsgetreuer Darstellung:
- Fig. 1: eine perspektivische Ansicht eines vorschlagsgemäßen Reinigungsgeräts;
- Fig. 2: eine schematische Darstellung einer mittels des Reinigungsgeräts erstellten Karte einer Reinigungsfläche;
- Fig. 3A-G: Draufsichten des Reinigungsgeräts, die eine mögliche Abfolge eines Verschiebemanövers des vorschlagsgemäßen Verfahrens veranschaulichen; und
- Fig. 4: ein schematisches Ablaufdiagramm des vorschlagsgemäßen Verfahrens bzw. einzelne Verfahrensschritte des vorschlagsgemäßen Verfahrens zum Betreiben des Reinigungsgeräts.

In den teilweise nicht maßstabsgerechten, nur schematischen Figuren werden für gleiche, gleichartige oder ähnliche Bauteile und Komponenten dieselben Bezugszeichen verwendet, wobei entsprechende oder vergleichbare Eigenschaften oder Vorteile erreicht werden, auch wenn von einer wiederholten Beschreibung abgesehen wird.

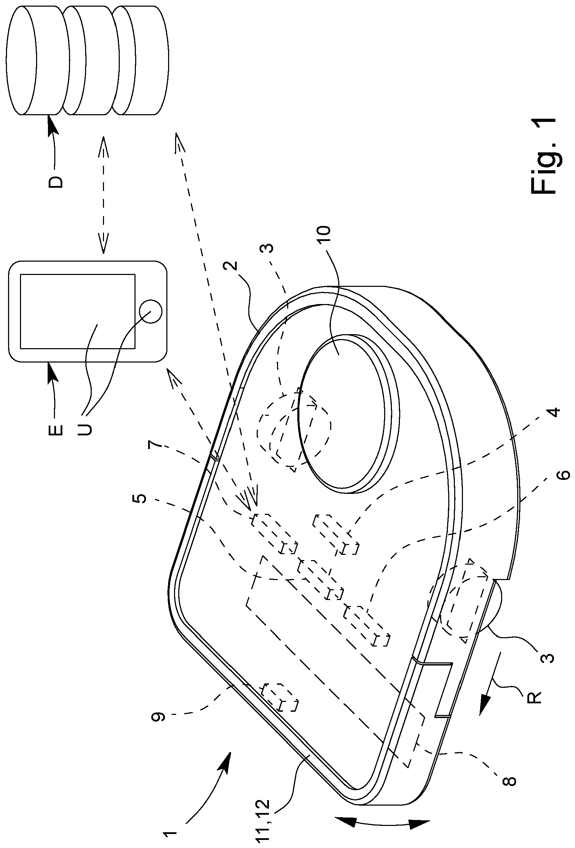

Fig. 1 zeigt ein System mit einem vorschlagsgemäßen selbstfahrenden Reinigungsgerät 1, einem optionalen, externen Kommunikationsgerät E und einer optionalen, externen Datenbank D.

Das Reinigungsgerät 1 ist vorzugsweise als Staubsaugerroboter, Wischroboter oder kombinierter Saug-Wisch-Roboter ausgebildet bzw. dazu ausgebildet, eine Reinigungsfläche F während eines Reinigungsvorgangs oder mehrerer Reinigungsvorgänge selbsttätig/autonom abzufahren, um die Reinigungsfläche F zu reinigen, insbesondere abzusaugen und/oder zu wischen.

Insbesondere ist das Reinigungsgerät 1 dazu ausgebildet, Sauggut bzw. Luft zusammen mit Sauggut und/oder ein flüssiges Reinigungsmittel zusammen mit Sauggut von der Reinigungsfläche F zu saugen bzw. aufzuwischen.

Ein Reinigungsvorgang im Sinne der vorliegenden Erfindung ist vorzugsweise ein Vorgang, bei dem ein Reinigen der Reinigungsfläche F bzw. eines Teilbereichs der Reinigungsfläche F mittels des Reinigungsgeräts 1 erfolgt und/oder bei dem das Reinigungsgerät 1 eine Reinigungsfläche F bzw. einen Teilbereich der Reinigungsfläche F reinigt, insbesondere absaugt und/oder wischt.

Vorzugsweise wird die Reinigungsfläche F durch einen Fußboden gebildet. Es ist jedoch auch möglich, dass eine sonstige Fläche, wie ein Fenster, eine Fassade oder einen Rasen, die Reinigungsfläche F aufweist oder bildet.

Das Reinigungsgerät 1 weist ein Gehäuse 2, mehrere, vorliegend zwei, elektromotorisch angetriebene Räder 3, eine Navigationseinrichtung 4, eine Datenverarbeitungseinrichtung 5, eine Steuereinrichtung 6 und/oder eine Kommunikationseinrichtung 7 auf.

Das Reinigungsgerät 1 kann sich vorzugsweise selbsttätig/autonom innerhalb einer Umgebung bzw. auf der Reinigungsfläche F orientieren und fortbewegen, insbesondere mittels der Räder 3, der Navigationseinrichtung 4, der Datenverarbeitungseinrichtung 5 und/oder der Steuereinrichtung 6.

Das Reinigungsgerät 1 weist vorzugsweise auf einer Unterseite bzw. einer der Reinigungsfläche F zugewandten Seite eine längliche bzw. schlitzartige Ansaugöffnung 8 auf, über die Sauggut und/oder auf die Reinigungsfläche F aufgebrachtes Reinigungsmittel zusammen mit Sauggut aufgenommen bzw. eingesaugt werden kann.

Optional kann das Reinigungsgerät 1 mit einer insbesondere drehbaren Reinigungswalze ausgestattet sein (nicht dargestellt), wobei die Reinigungswalze in der Ansaugöffnung 8 angeordnet ist.

Das Reinigungsgerät 1 ist vorzugsweise mit einem elektromotorischen Gebläse (nicht dargestellt) und einem Sammelbehälter (nicht dargestellt) für das Sauggut ausgestattet.

Im Reinigungsbetrieb bzw. während eines Reinigungsvorgangs kann mittels des Gebläses über die Ansaugöffnung 8 und die optionale Reinigungswalze Sauggut bzw. Luft und/oder Reinigungsmittel zusammen mit Sauggut aus der Umgebung bzw. von der Reinigungsfläche F in das Reinigungsgerät 1, insbesondere den Behälter, gesaugt werden.

Im Falle eines Staubsaugerroboters wird das aufgenommene Sauggut von der Luft abgeschieden, beispielsweise mittels eines Filters (nicht dargestellt), wobei die (gereinigte) Luft anschließend wieder an die Umgebung abgegeben werden kann.

Es ist allerdings auch möglich, dass das Reinigungsgerät 1 keine Ansaugöffnung 8 bzw. kein Gebläse aufweist, beispielsweise wenn es sich bei dem Reinigungsgerät 1 um einen reinen Wischroboter ohne Saugfunktion handelt. In diesem Fall weist das Reinigungsgerät 1 vorzugsweise die üblichen Einrichtungen eines Wischroboters auf, wie ein Flüssigkeitsbehälter und ein der Reinigungsfläche F zugewandtes Wischtuch (nicht dargestellt). Bei einem kombiniertem Saug-/Wischroboter sind entsprechend vorzugsweise sowohl die üblichen Einrichtungen eines Staubsaugroboters als auch eines Wischroboters vorgesehen.

Das Reinigungsgerät 1 ist vorzugsweise mit einem Akkumulator (nicht dargestellt) ausgestattet, um alle elektrisch betriebenen Komponenten des Reinigungsgeräts 1 mit elektrischer Energie zu versorgen.

Die Steuereinrichtung 6 ist vorzugsweise dazu ausgebildet, die Räder 3 bzw. Elektromotoren (nicht dargestellt) des Reinigungsgerät 1, das Gebläse des Reinigungsgeräts 1 und/oder die optionale Reinigungswalze des Reinigungsgeräts 1 zu steuern, insbesondere zu aktivieren und/oder zu deaktivieren, und/oder die Leistung anzupassen, vorzugsweise zumindest teilweise automatisch.

Das Reinigungsgerät 1, insbesondere die Navigationseinrichtung 4, ist vorzugsweise mit mehreren Sensoren, beim Darstellungsbeispiel zwei Sensoren 9, 10, ausgestattet, um die Umgebung, insbesondere Objekte und/oder Hindernisse, in der Umgebung zu erfassen und/oder die (relative oder absolute) Position des Reinigungsgeräts 1 und/oder von Objekten/Hindernissen in der Umgebung zu bestimmen, insbesondere durch Messen des Abstands zwischen dem Reinigungsgerät 1 bzw. dem erfassten Objekt/Hindernis und einem oder mehrerer Referenzpunkten bzw. anderen Objekten/Hindernissen in der Umgebung.

Die dargestellten Sensoren 9, 10 sind vorzugsweise als Abstandssensoren bzw. zur Messung der Entfernung zu Objekten in der Umgebung ausgebildet.

Der (Abstands-)Sensor 9 bzw. 10 ist vorzugsweise als Laserabstandssensor, insbesondere Lidar-Sensor, PMD-Sensor bzw. Time-Off-Flight-Sensor oder Radarsensor, oder als Ultraschallsensor ausgebildet.

Bei der dargestellten Ausführungsform weist das Reinigungsgerät 1 mehrere, hier zwei unterschiedliche, (Abstands-)Sensoren 9 und 10 auf. Hier sind jedoch auch andere Lösungen möglich, beispielsweise bei denen das Reinigungsgerät 1 lediglich mit einem (Abstands-)Sensor 9 oder 10 ausgestattet ist.

Einzelne oder mehrere Aspekte, Vorteile, Merkmale, Eigenschaften und Verfahrensschritte, die lediglich im Zusammenhang mit einem der Sensoren 9 bzw. 10 beschrieben werden, sind vorzugsweise auch bei dem anderen Sensor 9 bzw. 10 vorgesehen, so dass entsprechende Ausführungen auch für den anderen Sensor 9 bzw. 10 gelten.

Vorzugsweise weist das Reinigungsgerät 1 einen (ersten) (Abstands-)Sensor 9 auf, beispielsweise wobei der Sensor 9 in Vorwärtsrichtung bzw. (üblicher) Fahrtrichtung R ausgerichtet ist bzw. dazu ausgebildet ist, in Fahrtrichtung R vor dem Reinigungsgerät 1 befindliche Objekte zu erkennen bzw. den Abstand des Reinigungsgeräts 1 von in Fahrtrichtung R vor dem Reinigungsgerät 1 befindlichen Objekte zu messen.

Vorzugsweise ist der (Abstands-)Sensor 9 auf einer Vorderseite des Reinigungsgeräts 1 angeordnet, insbesondere mittig und/oder innerhalb des Gehäuses 2, wie in Fig 1 dargestellt.

Die Vorderseite des Reinigungsgeräts 1 ist vorzugsweise als die Seite des Reinigungsgeräts 1 zu verstehen, die (üblicherweise) in die Fahrtrichtung R orientiert ist bzw. deren Flächennormale zumindest im Wesentlichen in die Fahrtrichtung R zeigt.

Unter der Fahrtrichtung R ist hierbei die Richtung zu verstehen, in die sich das Reinigungsgerät 1 bei normalem Betrieb üblicherweise bewegt bzw. die Vorwärtsrichtung des Reinigungsgeräts 1. Die (übliche) Fahrtrichtung R des Reinigungsgeräts 1 ist in Fig. 1 durch einen Pfeil dargestellt.

Prinzipiell ist es auch möglich, dass das Reinigungsgerät 1 zumindest kurzzeitig bzw. temporär rückwärtsfährt, beispielsweise um aus einer Ecke heraus zu navigieren. In diesem Fall zeigt die Fahrtrichtung R in die dem Pfeil von Fig. 1 entgegengesetzte Richtung bzw. ist die Rückseite in die Fahrtrichtung R orientiert.

Die Rückseite des Reinigungsgeräts 1 ist entsprechend die der Vorderseite gegenüberliegende Seite bzw. die (üblicherweise) von der (Vorwärts-)Fahrtrichtung R abgewandte Seite.

Beim Darstellungsbespiel gemäß Fig. 1 ist die Vorderseite des Reinigungsgeräts 1 zumindest im Wesentlichen gerade bzw. eben ausgebildet. Vorzugsweise ist die Rückseite des Reinigungsgeräts 1 gekrümmt bzw. abgerundet. Hier sind jedoch auch andere Lösungen möglich, beispielsweise wobei auch die Vorderseite gekrümmt bzw. abgerundet ist und/oder das Reinigungsgerät 1 bzw. das Gehäuse 2 des Reinigungsgeräts 1 kreisscheibenförmig ausgebildet ist.

Die Ansaugöffnung 8 ist vorzugsweise im vorderen Bereich des Reinigungsgeräts 1 angeordnet bzw. näher zu der Vorderseite angeordnet als zu der Rückseite.

Das Reinigungsgerät 1 weist vorzugsweise einen Stoßfänger bzw. Bumper 11 auf, um Zusammenstöße des Reinigungsgeräts 1 mit Objekten/Hindernissen abzufangen, abzudämpfen bzw. abzufedern.

Der Stoßfänger 11 ist vorzugsweise an der Vorderseite des Reinigungsgeräts 1 vorgesehen bzw. bildet die Vorderseite oder einen Teil davon. Insbesondere ist der Stoßfänger 11 am Gehäuse 2 befestigt und in Fahrtrichtung R vorne bzw. vor dem Gehäuse 2 angeordnet. In diesem Sinne kann die Vorderseite des Reinigungsgeräts 1 auch als die Seite definiert werden, die den Stoßfänger 11 aufweist.

Die im Rahmen der vorliegenden Erfindung verwendeten Begriffe "vorne" bzw. "vor", "hinten" bzw. "hinter" oder dergleichen beziehen sich vorzugsweise auf die übliche Orientierung des Reinigungsgeräts 1 beim Vorwärtsfahren bzw. bei der Bewegung in die übliche Fahrtrichtung R.

Zusätzlich oder alternativ zu dem (ersten) (Abstands-)Sensor 9 weist das Reinigungsgerät 1 einen (zweiten) (Abstands-)Sensor 10 auf, wobei der (zweite) Sensor 10 auf einer Oberseite bzw. auf der der Reinigungsfläche F abgewandten Seite des Reinigungsgeräts 1 angeordnet ist.

Bei der dargestellten Ausführungsform ist der (erste) Sensor 9 vorzugsweise als PMD-Sensor bzw. Time-Off-Flight-Sensor und der (zweite) Sensor 10 als Lidar-Sensor, besonders bevorzugt als 2D-Lidar-Sensor, ausgebildet. Hier sind jedoch auch andere Lösungen möglich.

Der Sensor 10 ist vorzugsweise dazu ausgebildet, die Umgebung des Reinigungsgeräts 1 abzutasten und/oder Objekte/Hindernisse in der Umgebung des Reinigungsgeräts 1, insbesondere seitlich bzw. horizontal vor, hinter oder neben dem Reinigungsgerät 1, zu erkennen bzw. den Abstand des Reinigungsgeräts 1 zu Objekten/Hindernissen in der Umgebung zu messen.

Der Sensor 10 ist vorzugsweise zumindest im Wesentlichen horizontal bzw. parallel zur Reinigungsfläche F ausgerichtet. Insbesondere ist der Sensor 10 dazu ausgebildet, ausgehend von dem Reinigungsgerät 1 Abstände in alle horizontalen Richtungen bzw. um 360 ° um das Reinigungsgerät 1 herum zu messen.

Dementsprechend ist jedem mit dem Sensor 10 gemessenen Abstand vorzugsweise eine Richtung zugeordnet bzw. wird jeder mit dem Sensor 10 gemessene Abstand zusätzlich mit einer Richtungsinformation versehen. Die Richtung wird vorzugsweise relativ zu der Ausrichtung des Reinigungsgeräts 1 und/oder Fahrtrichtung R des Reinigungsgeräts 1 angegeben. Insbesondere stellt die Richtung einen Winkel bzw. eine Winkellage relativ zu der Ausrichtung bzw. Fahrtrichtung R des Reinigungsgeräts 1 dar.

Ganz besonders bevorzugt weist der Sensor 10 einen um 360 ° um seine Vertikalachse rotierenden bzw. rotierbaren Laser auf, wobei der Laserstrahl des Lasers mehrmals, beispielsweise fünf Mal, pro Sekunde um 360 ° um die Vertikalachse rotiert.

Der Sensor 9 bzw. 10 weist vorzugsweise einen Erfassungsbereich auf, innerhalb dessen der Sensor 9 bzw. 10 Objekte erkennen bzw. Abstände zu Objekten messen kann, insbesondere mit einer Unsicherheit von weniger als 0,1 m oder 0,01 m. Außerhalb des Erfassungsbereichs befindliche Objekte können von dem Sensor 9 bzw. 10 nicht oder nur mit größerer Unsicherheit, beispielsweise mit einer Unsicherheit von mehr als 0,1 m oder 0,5 m, erkannt bzw. erfasst werden.

Vorzugsweise öffnet sich der Erfassungsbereich des ersten Sensors 9 ausgehend vom ersten Sensor 9 bzw. dem Reinigungsgerät 1 nach vorne bzw. in die übliche Fahrtrichtung R, insbesondere kegel- oder pyramidenförmig.

Der zweite Sensor 10 weist vorzugsweise einen kreis- bzw. zylinderförmigen Erfassungsbereich auf.

Zusätzlich kann das Reinigungsgerät 1 einen oder mehrere Sensoren, insbesondere Inertialsensoren, zur Messung der Eigenbewegung, insbesondere der Beschleunigung und/oder Geschwindigkeit, aufweisen (nicht dargestellt). Ein Inertialsensor des Reinigungsgeräts 1 kann als inertiale Messeinheit (IMU), Beschleunigungssensor oder Drehratensensor ausgebildet sein und/oder dazu ausgebildet sein, die Beschleunigung, die Geschwindigkeit, die Kraft und/oder die Drehrate der Bewegung des Reinigungsgeräts 1 und/oder die Orientierung und/oder eine Änderung der Fahrtrichtung R des Reinigungsgeräts 1 zu messen bzw. zu ermitteln.

Optional ist das Reinigungsgerät 1 mit einem Odometriesensor ausgestattet (nicht dargestellt), um die Position und/oder Orientierung des Reinigungsgeräts 1 anhand der Umdrehung der Räder 3 zu ermitteln.

Vorzugsweise lokalisiert sich das Reinigungsgerät 1 in der Umgebung bzw. auf der Reinigungsfläche F bzw. bestimmt das Reinigungsgerät 1 seine Position, insbesondere mittels der Sensoren 9, 10 und ggf. weiterer Sensoren. Zur Lokalisierung bzw. Positionsbestimmung wird vorzugsweise der Abstand zu Referenzpunkten bzw. Objekten/Hindernissen, wie einer Wand, mittels der Sensoren gemessen, insbesondere in zwei Richtungen, die orthogonal zueinander sind.

Wie bereits erläutert, weist das Reinigungsgerät 1 vorzugsweise einen Stoßfänger 11 auf, um Zusammenstöße des Reinigungsgeräts 1 mit Objekten/Hindernissen abzufangen, abzudämpfen bzw. abzufedern.

Der Stoßfänger 11 ist vorzugsweise bewegbar bzw. beweglich gelagert, bevorzugt gegen eine Feder bzw. Federkraft, insbesondere zumindest im Wesentlichen in Richtung parallel zur Reinigungsfläche F und/oder entgegen der Fahrtrichtung R.

Wenn das Reinigungsgerät 1 mit dem Stoßfänger 11 gegen eine (schweres) Objekt, wie ein Möbelstück, oder ein Hindernis, wie eine Wand, fährt, wird der Stoßfänger 11 vorzugsweise durch den Zusammenstoß entgegen der Fahrtrichtung R bzw. relativ zum Gehäuse 2 bewegt, insbesondere entgegen einer (Feder-)Kraft. Auf diese Weise werden durch den Zusammenstoß auftretende Kräfte vom Stoßfänger 11 abgeleitet bzw. abgefedert. Insbesondere wirken bei einer (frontalen) Kollision aufgrund des Stoßfängers 11 nur noch geringe Kräfte auf das Gehäuse 2 oder andere Teile des Reinigungsgeräts 1.

Vorzugsweise kehrt der Stoßfänger 11 (nach einem Zusammenstoß) selbsttätig in seine Ausgangsposition zurück, insbesondere durch die Federkraft.

Optional ist das Reinigungsgerät 1 mit einem Schiebeteil 12 ausgestattet, um Objekte bzw. Verschiebeobjekte Ov auf der Reinigungsfläche F zu verschieben.

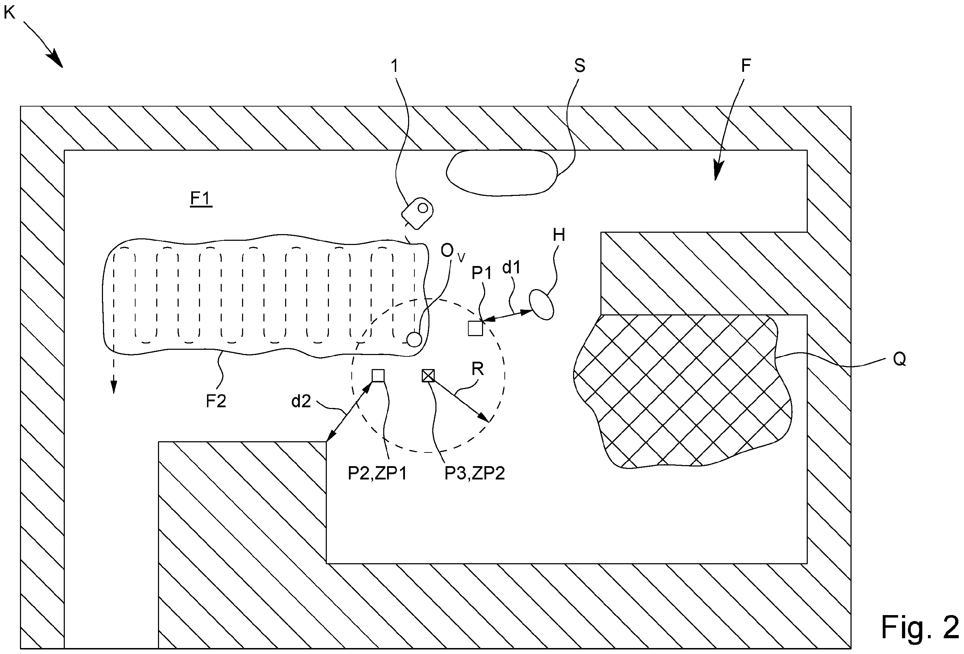

Gemäß einer bevorzugten Ausführungsform ist das Schiebeteil 12 zumindest temporär absenkbar bzw. in vertikaler Richtung bzw. in Richtung der Reinigungsfläche F bewegbar, insbesondere schiebbar und/oder verschwenkbar. Vorzugsweise ist das Schiebeteil 12 von einer angehobenen Position, die das Schiebeteil 12 bei einem Reinigungsvorgang einnimmt, in eine abgesenkte Position bewegbar. Die abgesenkte Position wird vorzugsweise eingenommen, um mit dem Reinigungsgerät 1 ein Objekt zu verschieben bzw. ein Verschiebemanöver durchzuführen, wie nachfolgend anhand der Fig. 2 bis 4 näher erläutert wird.

In der abgesenkten Position ist der (minimale) Abstand zwischen dem Schiebeteil 12 und der Reinigungsfläche F gegenüber der angehobenen Position verringert. Besonders bevorzugt ist der (minimale) Abstand zwischen dem Schiebeteil 12 und der Reinigungsfläche F in der angehobenen Position vorzugsweise mindestens doppelt so groß wie in der abgesenkten Position.

Das Reinigungsgerät 1 weist vorzugsweise einen insbesondere motorischen Antrieb (nicht dargestellt) auf, um das Schiebeteil 12 wahlweise anzuheben oder abzusenken.

Bei der dargestellten Ausführungsform ist das Schiebeteil 12 in den Stoßfänger 11 integriert bzw. weist der Stoßfänger 11 das Schiebeteil 12 auf. Es ist also bei der dargestellten Ausführungsform vorgesehen, dass der Stoßfänger 11 optional absenkbar ist, um Objekte auf der Reinigungsfläche F zu verschieben.

Es sind jedoch auch Lösungen möglich, bei denen das Schiebeteil 12 als separates Bauteil ausgebildet ist. Beispielsweise kann das Schiebeteil 12 als ein insbesondere flexibler Abschnitt, wie eine Dichtlippe, ausgebildet sein, der vor der Ansaugöffnung 8 und/oder zwischen der Ansaugöffnung 8 und der Vorderseite des Reinigungsgeräts 1 bzw. dem Stoßfänger 11 angeordnet bzw. verschieblich geführt ist. Alternativ kann das Schiebeteil 12 in eine Bodenplatte des Reinigungsgeräts 1 integriert sein und aus dieser heraus absenkbar oder herunterklappbar sein.

Wie bereits erläutert, weist das Reinigungsgerät 1 vorzugsweise eine Datenverarbeitungseinrichtung 5 auf.

Die Datenverarbeitungseinrichtung 5 ist vorzugsweise dazu ausgebildet, die mittels der Navigationseinrichtung 4 bzw. der Sensoren 9 bzw. 10 gemessenen bzw. ermittelten Messwert auszuwerten und/oder als Eingabewerte an die Steuereinrichtung 6 zu übermitteln. Mittels der Steuereinrichtung 6 werden anschließend die Räder 3 angesteuert. Auf diese Weise kann das Reinigungsgerät 1 selbsttätig/autonom innerhalb der Umgebung bzw. auf der Reinigungsfläche F navigieren.

Die Datenverarbeitungseinrichtung 5 weist vorzugsweise eine Recheneinheit, wie einen Prozessor, und/oder einen (Daten-)Speicher, beispielsweise in Form einer SSD, auf.

Optional ist das Reinigungsgerät 1, insbesondere die Datenverarbeitungseinrichtung 5, mit einer Datenbank D ausgestattet oder datentechnisch verbunden oder verbindbar, vorzugsweise wobei die Datenbank D ein oder mehrere Angaben, Informationen, Werte, Kenngrößen und/oder Parameter zur Auswertung der Messwerte enthält. Beim Darstellungsbeispiel gemäß Fig. 1 ist die Datenbank D als externe Datenbank dargestellt. Es ist aber auch möglich, dass die Datenbank D im Reinigungsgerät 1 vorgesehen ist, insbesondere im (Daten-)Speicher der Datenverarbeitungseinrichtung 5. Darüber hinaus können auch mehrere Datenbanken D, insbesondere eine interne oder eine externe Datenbank D, vorgesehen sein.

Durch die Kommunikationseinrichtung 7 kann das Reinigungsgerät 1 mit einem oder mehreren (externen) Geräten, insbesondere einer Basisstation, einem Mobilgerät bzw. Kommunikationsgerät E, wie einem Mobiltelefon, und/oder mit einer oder mehreren (externen) Einrichtungen, wie einer (zentralen) Datenverarbeitungseinrichtung, beispielsweise einem Server, und/oder der (externen) Datenbank D zum Datenaustausch bzw. zur Signalübertragung (datentechnisch) gekoppelt werden.

Insbesondere ermöglicht die Kommunikationseinrichtung 7 eine drahtlose Datenverbindung zwischen dem Reinigungsgerät 1 und einem oder mehreren (externen) Geräten bzw. einer oder mehreren Einrichtungen, um ein Signal und/oder eine Information, insbesondere betreffend den Betrieb und/oder Status des Reinigungsgeräts 1, zu übermitteln bzw. zwischen dem Reinigungsgerät 1 und dem bzw. den Geräten und/oder der bzw. den Einrichtung(en) auszutauschen, wobei der Datenaustausch bzw. die Signalübertragung dabei direkt oder indirekt erfolgen kann.

Ein Signal im Sinne der vorliegenden Erfindung ist vorzugsweise ein Mittel zur Informationsübertragung, eine (moduliert) Welle, eine Bitsequenz, ein Paket im informationstechnischen Sinne oder dergleichen. Insbesondere sind einem Signal eine oder mehrere Informationen zugeordnet und/oder in dem Signal enthalten, die mittels des Signals übermittelbar ist bzw. sind.

Die Kommunikationseinrichtung 7 weist vorzugsweise einen Receiver zum Empfangen eines Signals, einen Transmitter zum Senden eines Signals und/oder eine Schnittstelle, insbesondere eine Funkschnittstelle, eine WPAN-Schnittstelle, eine Nahfeldkommunikationsschnittstelle, eine NFC-Schnittstelle, eine WLAN-Schnittstelle oder eine sonstige, besonders bevorzugt drahtlose, Schnittstelle auf.

Wie in Fig. 1 mit gestrichelten Linien angedeutet, ist sowohl eine direkte Kommunikation des Reinigungsgeräts 1 mit der Datenbank D möglich als auch eine indirekte Kommunikation insbesondere über das Kommunikationsgerät E.

Alternativ oder zusätzlich kann die Kommunikation des Reinigungsgeräts 1 auch über eine Basisstation (nicht dargestellt) erfolgen.

Eine Basisstation ist eine vorzugsweise stationäre Vorrichtung zum Anschließen bzw. Warten des Reinigungsgeräts 1, insbesondere um das Reinigungsgerät 1 auszusaugen bzw. zu entleeren und/oder elektrisch aufzuladen, vorzugsweise wobei das Reinigungsgerät hierzu selbsttätig zur Basisstation fährt. Die Basisstation kann auch zum Datenaustausch mit dem Reinigungsgerät 1 ausgebildet sein. Beispielsweise kann vorgesehen sein, dass das Reinigungsgerät 1 nur direkt mit der Basisstation kommuniziert und die Basisstation ggf. mit weiteren externen Geräten bzw. Einrichtungen, wie dem Kommunikationsgerät E. Die Basisstation kann auch die oder eine weitere Datenbank D enthalten.

Das System, insbesondere das Reinigungsgerät 1, weist vorzugsweise eine Benutzerschnittstelle U auf, vorzugsweise wobei die Benutzerschnittstelle U durch mindestens eine Anzeigeeinrichtung, wie einen Bildschirm oder einen Touchscreen, und/oder mindestens eine Eingabeeinrichtung, insbesondere ein Bedienelement, wie einen Drehknopf, gebildet ist.

Bei der dargestellten Ausführungsform weist das Kommunikationsgerät E die Benutzerschnittstelle U auf. Es sind jedoch auch Lösungen möglich, bei denen das Reinigungsgerät 1 und/oder die Basisstation die oder eine zusätzliche Benutzerschnittstelle U aufweisen/aufweist oder bilden/bildet.

Vorzugsweise kann ein Nutzer mittels des Kommunikationsgeräts E bzw. über die Benutzerschnittstelle U mit dem Reinigungsgerät 1 interagieren und/oder eine bzw. einen oder mehrere Informationen/Parameter entnehmen und/oder hinzufügen. Insbesondere kann ein Nutzer mittels des Kommunikationsgeräts E bzw. der Benutzerschnittstelle U das Reinigungsgerät 1 konfigurieren und/oder steuern, beispielsweise einen Reinigungsvorgang starten oder abbrechen und/oder Statusinformationen des Reinigungsgeräts 1 abrufen, beispielsweise einen Behälter- und/oder Batteriefüllstand.

Im Folgenden wird anhand der Fig. 2 bis 4 das vorschlagsgemäße Verfahren zum Betreiben des Reinigungsgeräts 1 näher erläutert.

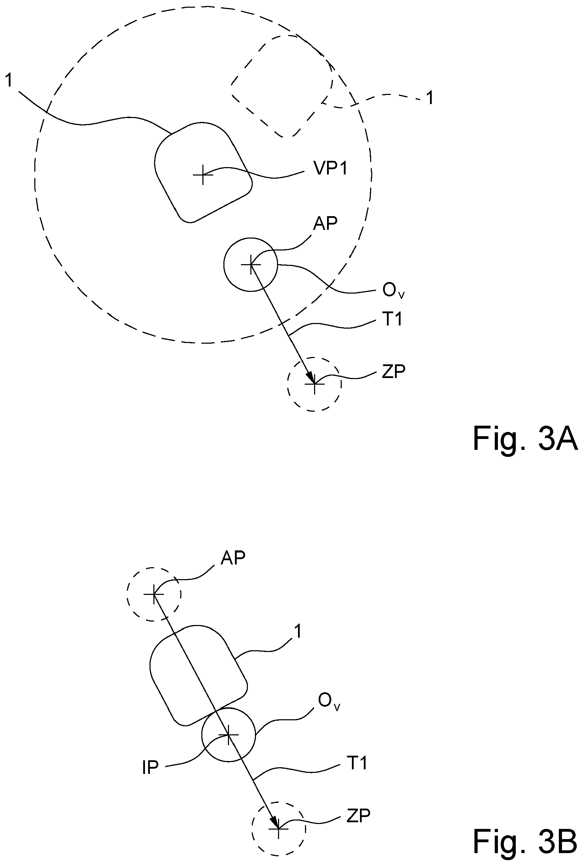

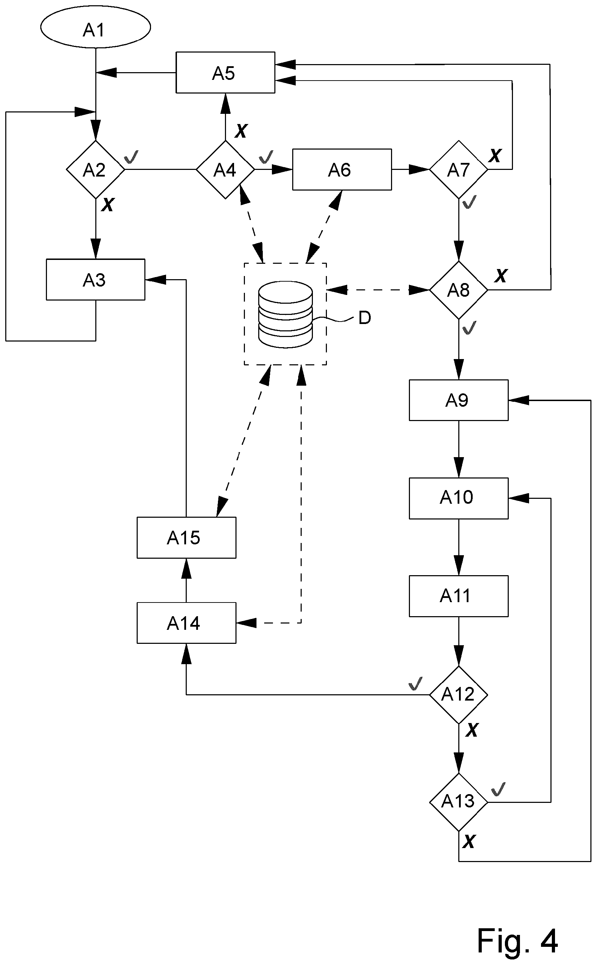

Fig. 2 zeigt eine insbesondere mittels des Reinigungsgeräts 1 erstellte Karte K der Reinigungsfläche F mit einem Verschiebeobjekt Ov. Fig. 3A bis 3D zeigen jeweils einen Schritt des Verschiebemanövers zum Verschieben des Verschiebeobjekts Ov zu einer Zielposition ZP. Fig. 4 zeigt ein schematisches Ablaufdiagramm gemäß einer bevorzugten Verfahrensvariante mit mehreren Verfahrensschritten/Vorgängen, insbesondere Operationen und/oder Verzweigungen.

Das vorschlagsgemäße Verfahren bzw. einzelne Verfahrensschritte des vorschlagsgemäßen Verfahrens wird bzw. werden vorzugsweise mittels des Reinigungsgeräts 1 durchgeführt.

Das Reinigungsgerät 1, insbesondere die Datenverarbeitungseinrichtung 5, ist vorzugsweise zur Ausführung des hierin beschriebenen Verfahrens bzw. einzelner Verfahrensschritte ausgebildet.

Vorzugsweise sind Befehle bzw. ist der Algorithmus zur Durchführung des vorschlagsgemäßen Verfahrens bzw. einzelner Verfahrensschritte des vorschlagsgemäßen Verfahrens elektronisch in einem (Daten-)Speicher des Reinigungsgeräts 1, insbesondere in der Datenverarbeitungseinrichtung 5, und/oder der Datenbank D gespeichert.

Das Verfahren ist vorzugsweise mehrstufig bzw. mehrschrittig ausgebildet. Insbesondere weist das Verfahren mehrere Verfahrensschritte auf, wobei die einzelnen Verfahrensschritte grundsätzlich unabhängig voneinander und in beliebiger Kombination durchgeführt werden können, sofern im Folgenden nicht anders erläutert.

Das vorschlaggemäße Verfahren zeichnet insbesondere dadurch aus, dass insbesondere während der Reinigung der Reinigungsfläche F vorzugsweise automatisch bzw. mittels des Reinigungsgeräts 1 ein verschiebbares bzw. zu verschiebendes Objekt - im Folgenden Verschiebeobjekt Ov genannt - erkannt/identifiziert wird, wobei das Reinigungsgerät 1 bei einem Verschiebeobjekt Ov automatisch zumindest temporär ein Verschiebemanöver durchführt. Hierfür wird zunächst eine Zielposition ZP für das Verschiebeobjekt Ov festgelegt und anschließend mittels des Reinigungsgeräts 1 das Verschiebeobjekt Ov zu der Zielposition ZP verschoben.

Das Verfahren bzw. die Programmroutine wird vorzugsweise durch Starten bzw. Einschalten des Reinigungsgeräts 1 initiiert, vorzugsweise in einem ersten Verfahrensschritt/Vorgang A1.

Das Reinigungsgerät 1 kann automatisch bzw. selbsttätig das Verfahren initiieren bzw. den Reinigungsvorgang starten, beispielsweise in vordefinierten Intervallen, anhand eines Timer und/oder ereignisabhängig. Zusätzlich oder alternativ kann das Verfahren bzw. ein Reinigungsvorgang durch einen Nutzer initiiert bzw. gestartet werden, beispielsweise mittels des Kommunikationsgeräts E bzw. über die Benutzerschnittstelle U.

Vorzugsweise wird insbesondere anschließend bzw. in einem weiteren/zweiten Verfahrensschritt A2 bzw. anhand einer Verzweigung überprüft, ob sich ein Objekt auf der Reinigungsfläche F befindet, insbesondere mittels einem oder mehrerer Sensoren 9, 10. Besonders bevorzugt wird kontinuierlich überprüft, ob sich ein Objekt in Fahrtrichtung R bzw. auf dem (geplanten) Fahrweg des Reinigungsgeräts 1 bzw. vor dem Reinigungsgerät 1 befindet.

Unter dem Begriff "Objekt" im Sinne der vorliegenden Erfindung ist insbesondere ein Gegenstand zu verstehen, der beweglich ist bzw. sich bei unterschiedlichen Reinigungsvorgängen an unterschiedlichen Stellen auf der Reinigungsfläche F befinden kann, beispielsweise ein Möbelstück, wie ein Stuhl, oder der sich nicht immer bzw. nur temporär bzw. nur bei dem aktuellen Vorgang auf der Reinigungsfläche befindet, beispielsweise Kleidung, wie eine Socke.

Insbesondere ist ein Objekt im Sinne der vorliegenden Erfindung lose bzw. nicht an dem Boden befestigt/verankert und/oder mit einer maximalen Kraft bzw. Losbrechkraft zur Überwindung der Haftreibung zwischen dem Objekt und dem Boden bzw. der Reinigungsfläche von weniger 1 kN verschiebbar.

Feststehende Gegenstände/Hindernisse, wie Raumwände oder (verankerte) Schränke, sind vorzugsweise nicht als Objekt im Sinne der vorliegenden Erfindung zu verstehen. Vielmehr definieren bzw. begrenzen diese die Reinigungsfläche F, insbesondere derart, dass das Reinigungsgerät 1 diese umfahren muss. Derartige Gegenstände/Hindernisse können insbesondere durch eine Kartierung berücksichtigt werden.

Für den Fall, dass sich kein Objekt auf der Reinigungsfläche F bzw. auf dem (geplanten) Fahrweg befindet, wird die Reinigung bzw. der Reinigungsvorgang gestartet bzw. fortgesetzt, insbesondere in einem weiteren/dritten Verfahrensschritt/Vorgang A3.

Zur Reinigung der Reinigungsfläche F bewegt sich bzw. fährt das Reinigungsgerät über die Reinigungsfläche F in Fahrtrichtung R bzw. entlang des (geplanten) Fahrwegs.

Der Fahrweg kann beispielsweise einen oder mehrere mäanderförmige Abschnitte aufweisen, um die Reinigungsfläche F systematisch zu reinigen, wie in Fig. 2 dargestellt.

Während der Reinigung bzw. des Reinigungsvorgangs befindet sich das Schiebeteil 12 vorzugsweise in der angehobenen Position. Im Falle eines Staubsaugroboters und/oder eines Saug-Wisch-Roboters sind das Gebläse des Reinigungsgeräts 1 und die optionale Reinigungswalze während der Reinigung aktiviert.

Vorzugsweise wird die Reinigungsfläche F in mehrere Bereiche, insbesondere einen bereits gereinigten Bereich F1 und einen noch nicht gereinigten bzw. zu reinigenden Bereich F2 unterteilt.

Der gereinigte Bereich F1 kann vom Reinigungsgerät 1 beispielsweise dadurch erfasst werden, dass der zurückgelegte Fahrweg und/oder einzelne Positionen des Reinigungsgeräts 1 beim Reinigungsvorgang elektronisch gespeichert werden.

Der zu reinigende Bereich F2 kann beispielsweise durch einen Vergleich der Reinigungsfläche F mit dem gereinigten Bereich F1 ermittelt werden.

In der in Fig. 2 dargestellten Karte K sind die nicht befahrbaren Flächen, die beispielsweise durch Möbelstücke gebildet werden, und sonstige Begrenzungen der Reinigungsfläche F, beispielsweise Wände, mit parallelen Linien schraffiert dargestellt.

Die Reinigung der Reinigungsfläche F wird vorzugsweise so lange fortgesetzt, bis der Reinigungsvorgang abgeschlossen ist bzw. die Reinigungsfläche F vollständig gereinigt ist oder bis ein Objekt bzw. Verschiebeobjekt Ov erkannt wird.

Für den Fall, dass ein Objekt erkannt wird bzw. sich ein Objekt auf dem Fahrweg des Reinigungsgeräts 1 befindet, wird vorzugsweise in einem weiteren/vierten Verfahrensschritt/Vorgang A4 ermittelt, ob es sich bei dem Objekt um ein Verschiebeobjekt Ov oder ein zu umfahrendes Objekt Ou handelt.

Zu diesem Zweck wird vorzugsweise das erfasste Objekt bestimmt, analysiert, identifiziert und/oder klassifiziert, vorzugsweise wobei die Sensordaten der Sensoren 9, 10 mit der Datenverarbeitungseinrichtung 5 ausgewertet werden.

Für die Auswertung der Sensordaten können weitere Angaben, Informationen, Werte, Kenngrößen und/oder Parameter von der Datenverarbeitungseinrichtung 5 abgerufen werden, insbesondere von einem Speicher bzw. der Datenbank D, wie in Fig. 4 durch eine Strichlinie angedeutet.

Die Bestimmung des Objekts kann eine Bestimmung/Auswertung/Analyse der Größe und/oder des Gewichts des Objekts umfassen. Insbesondere können die Sensordaten und ggf. weitere Daten dazu verwendet werden, die Größe und/oder das Gewicht des Objekts zu bestimmen, bevorzugt unter Berücksichtigung der Entfernung zum Objekt.

Unter der Größe ist hierbei insbesondere die Höhe und/oder Breite des Objekts zu verstehen, insbesondere also die Dimensionen des Objekts orthogonal zur Fahrtrichtung R. Gegebenenfalls kann auch die Tiefe (Erstreckung des Objekts in Fahrtrichtung R) des Objekts berücksichtigt werden, sofern die Sensoren 9, 10 diese erfassen können.

Zusätzlich oder alternativ zur Größe kann auch die Form und/oder das Gewicht des Objekts bzw. der zweidimensionalen Projektion des Objekts (beispielsweise, wenn es sich bei den Sensordaten um ein Kamerabild handelt) bestimmt werden.

Besonders bevorzugt wird - zusätzlich oder alternativ zur Größen-, Form- und/oder Gewichtsbestimmung - das erfasste Objekt identifiziert und/oder klassifiziert. Hierzu wird vorzugsweise ein Objekterkennungsalgorithmus verwendet, der insbesondere die Verwendung eines neuronalen Netzwerks umfasst. Ein Beispiel für einen solchen Objekterkennungsalgorithmus ist der Open-Source-Algorithmus YOLO (*You Only Look Once*), beispielsweise in der Version 7 (Stand Juli 2022) oder in der Version 8 (Stand Januar 2023). Es können jedoch auch andere Algorithmen verwendet werden.

Identifizierung bzw. Klassifizierung bedeutet hierbei vorzugsweise, dass das Reinigungsgerät 1 bestimmt, um was für ein Objekt, beispielsweise eine Socke, oder zumindest was für eine Objektklasse, bei einer Socke beispielsweise Kleidung, es sich handelt. Zusätzlich wird vorzugsweise ein (Konfidenz-)Wert, beispielsweise eine Prozentzahl, ausgegeben, der angibt, wie sicher das Objekt identifiziert bzw. klassifiziert werden konnte (*Level of Confidence*).

Nachdem ein Objekt erkannt und vorzugsweise weitergehend analysiert/bestimmt wurde, erfolgt vorzugsweise eine Bestimmung, ob das Objekt verschiebbar ist. Es wird also bestimmt, ob das Objekt ein Verschiebeobjekt Ov ist.

Zur Bestimmung, ob das erfasste Objekt ein Verschiebeobjekt Ov ist, werden vorzugsweise die Sensordaten bzw. davon abgeleitete Werte, wie die Form, die Größe, das Gewicht, die Objektklasse, der Objektidentifikator, der Konfidenzwert, etc. verwendet. Vorzugsweise werden weitere, insbesondere von der Datenbank D abgerufene Angaben, Informationen, Werte, Kenngröße und/oder Parameter verwendet, beispielsweise vordefinierte Schwellwerte oder Listen.

Beispielsweise kann die ermittelte Größe des Objekts mit einem oder mehreren Schwellwerten verglichen werden. Wenn die Objektgröße, insbesondere die Breite und/oder Höhe, unterhalb eines vordefinierten Schwellwerts liegt, wird das Objekt vorzugsweise als Verschiebeobjekt Ov bestimmt und/oder wenn die Objektgröße, insbesondere die Breite und/oder Höhe, oberhalb eines vordefinierten Schwellwerts liegt, wird das Objekt als zu umfahrendes Objekt Ou bestimmt.

Die beiden genannten Schwellwerte können unterschiedlich sein. Liegt die Objektgröße in diesem Fall zwischen den Schwellwerten, wird das Objekt vorzugsweise weder als Verschiebeobjekt Ov noch als zu umfahrendes Objekt Ou bestimmt.

Es ist auch möglich, einen weiteren Schwellwert festzulegen, der überschritten werden muss, um das Objekt als Verschiebeobjekt Ov zu bestimmen. Vorzugsweise werden also nur solche Objekte als Verschiebeobjekte Ov bestimmt, die nicht zu klein und nicht zu groß sind. Zu kleine Objekte werden vorzugsweise ebenfalls als zu umfahrende Objekte Ou bestimmt, können ggf. aber auch als aufzunehmende Objekte bestimmt werden.

Besonders bevorzugt werden die Sensordaten bzw. davon abgeleitete Werte mit einer Liste, Tabelle oder Matrix, insbesondere einer Lookup-Tabelle, verglichen, um zu bestimmen, ob das Objekt ein Verschiebeobjekt Ov ist. Hierbei ist beispielsweise jeder Objektklasse oder jedem Objektidentifikator ein Wert zugeordnet, der angibt, ob das Objekt bzw. die Objektklasse verschiebbar ist. Zusätzlich kann angegeben sein, ob das Objekt zu umfahren ist oder überfahren werden kann, falls es nicht verschiebbar ist. Beispielsweise kann in der Liste basierend auf dem Objektgewicht bestimmt sein, ob ein Objekt verschiebbar ist.

Vorzugsweise wird ein als verschiebbar gelistetes Objekt nur dann als Verschiebeobjekt Ov bestimmt, wenn der Konfidenzwert oberhalb einer vordefinierten Schwelle liegt, beispielsweise bei über 90%.

Besonders bevorzugt wird ein Objekt als Verschiebeobjekt Ov bestimmt, wenn das Objekt eine (maximale) Breite und/oder Höhe von weniger als 100 cm oder 50 cm und/oder von mehr als 0,5 cm oder 1 cm und/oder ein Gewicht von weniger als 10 kg oder 2 kg aufweist.

Die Objekterkennung und/oder die Bestimmung, ob ein Objekt verschiebbar, zu umfahren oder zu überfahren ist, erfolgt besonders bevorzugt wie in der nicht veröffentlichten europäischen Anmeldung 23 19 63 60.4 beschrieben, deren Offenbarungsgehalt hiermit in ihrer Gesamtheit durch Verweis in die vorliegende Anmeldung mit aufgenommen wird.

Je nachdem, ob das erfasste Objekt als Verschiebeobjekt Ov erkannt wird, werden vorzugsweise verschiedene Maßnahmen bzw. Schritte eingeleitet.

Für den Fall, dass das Objekt kein Verschiebeobjekt Ov ist bzw. als zu umfahrendes Objekt Ou bestimmt wurde, wird vorzugsweise das Objekt Ou umfahren, insbesondere in einem weiteren/fünften Verfahrensschritt A5.

Vorzugsweise wird zum Umfahren des Objekts Ou ein neuer Fahrweg gewählt bzw. die Fahrtrichtung R geändert bzw. ein Ausweichmanöver eingeleitet. Insbesondere werden mittels der Steuereinrichtung 6 die Räder 3 entsprechend angesteuert. Bevorzugt verbleibt das Schiebeteil 12 in der angehobenen Position, wenn ein Objekt Ou umfahren wird.

Nachdem das Objekt Ou umfahren wurde, setzt das Reinigungsgerät 1 vorzugsweise die Reinigung im Normalbetrieb fort bzw. wird der Reinigungsvorgang abgeschlossen, vorzugsweise wobei kontinuierlich überprüft wird, ob ein (weiteres) Objekt auf dem (neuen) Fahrweg liegt, wie bereits erläutert.

Gemäß einer bevorzugten Verfahrensvariante kann in einem weiteren Verfahrensschritt an einen Nutzer eine Mitteilung ergehen, insbesondere über das Kommunikationsgerät E bzw. die Benutzerschnittstelle U, wenn das Reinigungsgerät 1 nicht mit ausreichender Sicherheit bestimmen kann, ob es sich bei dem Objekt um ein Verschiebeobjekt Ov oder ein zu umfahrendes Objekt Ou handelt, beispielsweise weil die Größe in einem Zwischenbereich liegt oder der Konfidenzwert zu gering ist.

In diesem Fall kann das Reinigungsgerät 1, insbesondere die Kommunikationseinrichtung 4, eine Mitteilung mit einer Anfrage an den Nutzer, insbesondere das externe Kommunikationsgerät E, senden, ob das Objekt verschoben werden soll bzw. ob es sich um ein Verschiebeobjekt Ov handelt. Bevorzugt wird ein vom Reinigungsgerät 1 erfasstes Kamerabild des Objekts oder dergleichen an den Nutzer geschickt.

Wurde das Objekt automatisch bzw. vom Reinigungsgerät 1 oder durch den Nutzer als Verschiebeobjekt Ov bestimmt/erkannt, führt das Reinigungsgerät 1 vorzugsweise ein Verschiebemanöver durch.

Vorzugsweise wird zunächst bzw. in einem weiteren/sechsten Verfahrensschritt bzw. vor Durchführung des Verschiebemanövers eine Zielposition ZP für das Verschiebeobjekt Ov festgelegt und optional elektronisch gespeichert, insbesondere in dem (Daten-)Speicher der Datenverarbeitungseinrichtung 5.

Optional wird auch die Ausgangsposition AP des Verschiebeobjekts Ov vor Durchführung des Verschiebemanövers elektronisch gespeichert, insbesondere in dem (Daten-)Speicher der Datenverarbeitungseinrichtung 5.

Wie bereits eingangs erläutert, wird die Zielposition ZP vorzugsweise nur im gereinigten Bereich F1 festgelegt.

Zusätzlich oder alternativ wird als Zielposition ZP nur eine Position festgelegt, die einen vordefinierten Mindestabstand, beispielsweise von mehr als 10 cm oder 50 cm, zu einem Hindernis H, wie einer Wand, aufweist und/oder die in einem vordefinierten Radius R, beispielsweise von mindestens 10 cm oder 50 cm, um die Zielposition ZP frei von Hindernissen ist.

Bei mehreren ermittelten/möglichen Zielpositionen ZP wird vorzugsweise diejenige Zielposition ZP festgelegt, die den geringsten Abstand zur Ausgangsposition AP aufweist.

In der in Fig. 2 dargestellten Situation befindet sich das Verschiebeobjekt Ov im noch zu reinigenden Bereich F2.

Zur Veranschaulichung sind drei Positionen P1 bis P3 dargestellt, die allesamt im bereits gereinigten Bereich F1 liegen, also grundsätzlich Zielpositionen ZP sein können.

Die erste Position P1 weist jedoch einen Abstand d1 zu einem Hindernis H auf, der kleiner ist als der vordefinierte Mindestabstand, so dass die Position P1 keine mögliche Zielposition ZP darstellt.

Sowohl die zweite Position P2 als auch die dritte Position P3 sind jeweils ausreichend weit von etwaigen Hindernissen entfernt. Der Abstand d2 der Position P2 und der Abstand der Position P3 zu dem jeweils nächsten Hindernis ist kleiner als der vordefinierte Mindestabstand. Mit anderen Worten ist der vordefinierte Radius R um die Positionen P2 und P3 frei von Hindernissen.

Folglich stellt die Position P2 eine erste mögliche Zielposition ZP1 und die Position P3 eine zweite mögliche Zielposition ZP2 dar. Von den beiden Zielpositionen ZP1 und ZP2 wird die zweite Zielposition ZP2 ausgewählt/festgelegt, da der Abstand der Zielposition ZP2 zu der Ausgangsposition AP kleiner ist als der Abstand der Zielposition ZP1 zu der Ausgangsposition AP.

Bei einer bevorzugten Ausführungsform ist bzw. sind insbesondere durch eine Nutzereingabe über das Kommunikationsgerät E bzw. die Benutzerschnittstelle U eine oder mehrere mögliche Zielpositionen ZP.

Insbesondere können ein oder mehrere Sammelstellen S durch einen Nutzer definiert werden, die vorrangig als Zielposition ZP ausgewählt werden.

Zusätzlich oder alternativ kann bzw. können ein oder mehrere Sperrbereiche Q vorgebbar sein, in denen kein Verschiebemanöver durchgeführt wird und/oder in denen keine Zielposition ZP festgelegt wird.

In der Karte K gemäß Fig. 2 sind eine Sammelstelle S und ein Sperrbereich Q zu Veranschaulichung dargestellt.

Vorzugsweise wird anschließend bzw. in einem weiteren/siebten Verfahrensschritt A7 überprüft, ob eine Zielposition ZP vorliegt bzw. festgelegt werden konnte.

Für den Fall, dass keine Zielposition ZP festlegbar ist, wird vorzugsweise das Verschiebeobjekt Ov umfahren.

Für den Fall, dass eine Zielposition ZP festgelegt wurde, wird vorzugsweise anschließend das Verschiebemanöver initiiert bzw. durchgeführt.

Bei dem Verschiebemanöver wird das Verschiebeobjekt Ov mittels des Reinigungsgeräts 1, insbesondere mit der Vorderseite des Reinigungsgeräts 1 bzw. mittels des Stoßfängers 11, von der Ausgangsposition AP zu der festgelegten Zielposition ZP verschoben. Optional wird hierfür das Schiebeteil 12 des Reinigungsgeräts abgesenkt.

Bei dem Verschiebemanöver bzw. einem weiteren/achten Verfahrensschritt A8 wird vorzugsweise zunächst eine Vororientierungsposition VP für das Reinigungsgerät 1 bestimmt. Wie eingangs bereits erläutert, ist die Vororientierungsposition VP vorzugsweise diejenige Position, die zusammen mit der Ausgangsposition AP und der Zielposition ZP auf einer Geraden liegen, wobei die Ausgangsposition AP bzw. das Verschiebeobjekt Ov zwischen der Vororientierungsposition VP und der Zielposition ZP liegt.

Vorzugsweise wird als Vororientierungsposition VP eine Position ausgewählt, die einen vordefinierten Mindestabstand zu einem Hindernis H, wie einer Wand, aufweist.

Für den Fall, dass eine Vororientierungsposition VP ermittelt wurde bzw. eine Vororientierung des Reinigungsgeräts 1 relativ zum Verschiebeobjekt Ov möglich ist, bewegt sich das Reinigungsgerät 1 automatisch zu der bzw. in die Vororientierungsposition VP, insbesondere in einem weiteren/neunten Verfahrensschritt A9.

Wie in Fig. 3A dargestellt, richtet sich das Reinigungsgerät 1 für das Verschiebemanöver derart zum Verschiebeobjekt Ov aus, dass das Verschiebeobjekt Ov durch eine geradlinige Vorwärtsbewegung bzw. entlang einer geradlinigen, insbesondere hindernisfreien, Trajektorie T1 von der Ausgangsposition AP zur Zielposition ZP verschoben werden kann.

Für den Fall, dass keine Vororientierungsposition VP bestimmt werden kann bzw. eine Vororientierung des Reinigungsgeräts 1 nicht möglich ist, beispielsweise weil das Verschiebeobjekt Ov bzw. die Ausgangsposition zu nah an einem Hindernis H ist, wird das Verschiebemanöver abgebrochen bzw. das Verschiebeobjekt Ov umfahren, wie bereits erläutert.

Es ist bevorzugt, dass sich das Reinigungsgerät 1 mittig zum Verschiebeobjekt Ov positioniert/ausrichtet, insbesondere derart, dass die (geometrische) Mitte und/oder der (geometrische) Schwerpunkt des Verschiebeobjekts Ov, die (geometrische) Mitte des Reinigungsgeräts 1, insbesondere der Vorderseite des Reinigungsgeräts 1, und die Zielposition ZP eine Gerade bilden bzw. auf einer geradlinigen Linie liegen.

Auf diese Weise wird das Risiko verringert, dass sich das Verschiebeobjekt Ov während des Verschiebens von der (geplanten) Trajektorie T1 abkommt.

Nach Erreichen der Vororientierungsposition VP bzw. in einem weiteren/zehnten Verfahrensschritt A10 wird das Verschiebeobjekt Ov entlang der (geplanten) Trajektorie T1 von der Ausgangsposition AP zu der Zielposition ZP verschoben, wie in Fig. 3B dargestellt.

Vorzugsweise fährt dazu das Reinigungsgerät 1 frontal bzw. mittels der Vorderseite bzw. des Stoßfängers 11 gegen das Verschiebeobjekt Ov, insbesondere mit einer vordefinierten Geschwindigkeit, besonders bevorzugt derart, dass das Verschiebeobjekt Ov in Richtung der Zielposition ZP geschoben bzw. gedrückt wird.

Es ist bevorzugt, dass das Verschiebeobjekt Ov in einem Verschiebevorgang bzw. kontinuierlich von der Ausgangsposition AP zur Zielposition ZP geschoben wird.

Optional kann das Verschiebeobjekt Ov jedoch mittels mehrerer Verschiebevorgänge bzw. mehrerer Vorwärts- und Rückwärtsbewegungen des Reinigungsgeräts 1 verschoben werden. Beispielsweise kann das Verschieben des Verschiebeobjekts Ov in Abhängigkeit von der Entfernung der Ausgangsposition AP zur Zielposition ZP in mehrere Schiebevorgänge bzw. insbesondere äquidistante Teilstrecken unterteilt werden, vorzugsweise wobei das Reinigungsgerät 1 nach jedem Schiebevorgang bzw. nach Zurücklegen jeder Teilstrecke anhält und optional zurückfährt, um die aktuelle Position bzw. Istposition IP des Verschiebeobjekts Ov zu bestimmen.

Vorzugsweise wird während des Verschiebemanövers insbesondere kontinuierlich oder in Intervallen überwacht, ob die Istposition IP des Verschiebeobjekts Ov von der (geplanten) Trajektorie T1 abweicht.

Bei Erreichen oder Überschreiten eines vordefinierten Grenzwertes der Abweichung zwischen der Istposition IP des Verschiebeobjekts Ov und der (geplanten) Trajektorie T1 wird vorzugsweise der (aktuelle) Schiebevorgang abgebrochen und/oder eine neue Vororientierungsposition VP2 ermittelt. Besonders bevorzugt positioniert sich das Reinigungsgerät 1 bei Erreichen oder Überschreiten eines vordefinierten Grenzwertes der Abweichung zwischen der Istposition IP und der (geplanten) Trajektorie T1 derart neu zum Verschiebeobjekt Ov, dass das Verschiebeobjekt Ov durch eine geradlinige Bewegung bzw. entlang einer geradlinigen (neuen) Trajektorie T2 von der Istposition IP zur (festgelegten) Zielposition ZP verschoben werden kann.

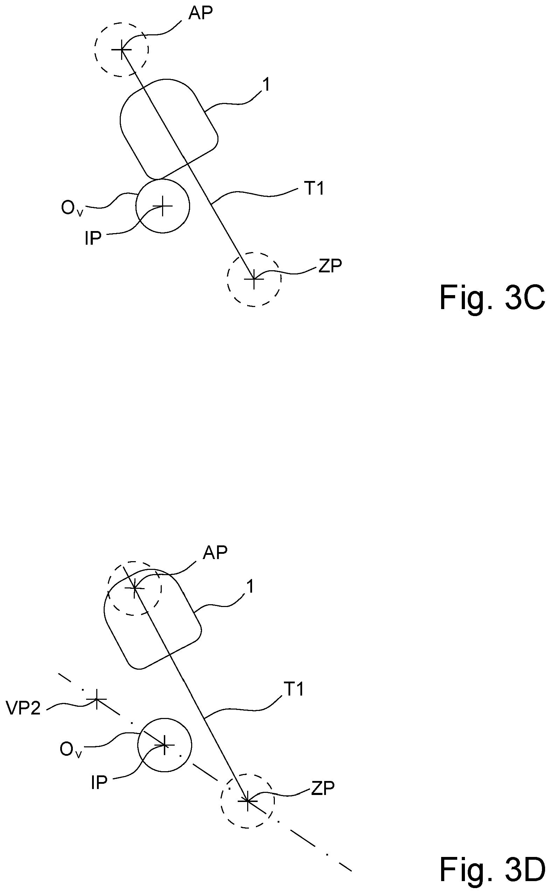

In Fig. 3C ist die Situation dargestellt, in der sich das Verschiebeobjekt Ov während des Verschiebemanövers bzw. während eines Verschiebevorgangs von der (geplanten/ursprünglichen) Trajektorie T1 entfernt hat.

Vorzugsweise wird detektiert, wenn der Abstand der Istposition IP von der geplanten/ursprünglichen Trajektorie T1 den Grenzwert überschreitet.

In diesem Fall oder wenn der Verschiebevorgang abgeschlossen ist, fährt das Reinigungsgerät 1 vorzugsweise insbesondere entlang der zurückgelegten Strecke auf einen vorbestimmten Abstand, beispielsweise von mindestens 5 cm oder 10 cm, zum Verschiebeobjekt Ov zurück, wie in Fig. 3D dargestellt.

Indem das Reinigungsgerät 1 zurückfährt, wird das Verschiebeobjekt Ov (vollständig) in den Erfassungsbereich des Reinigungsgeräts 1, insbesondere des Sensors 9, 10, gebracht, sodass die Istposition IP des Verschiebeobjekts Ov (präzise) bestimmt werden kann.

Der Abstand zum Verschiebeobjekt Ov ermöglicht darüber hinaus, dass sich das Reinigungsgerät 1 erneut relativ zum Verschiebeobjekt Ov ausrichten bzw. eine neue Vororientierungsposition VP2 einnehmen kann.

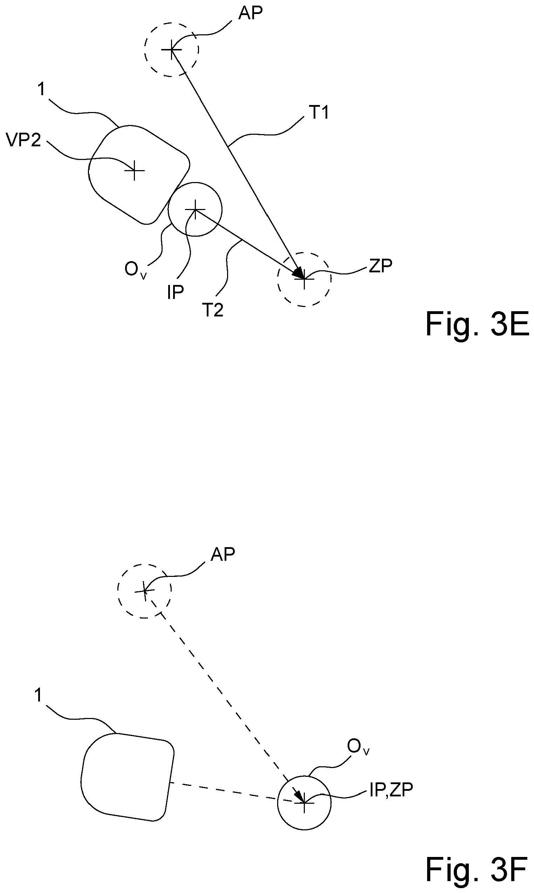

In Fig. 3E ist die Situation dargestellt, in der das Reinigungsgerät 1 sich derart relativ zum Verschiebeobjekt Ov ausgerichtet hat, dass das Verschiebeobjekt Ov auf einer neuen geradlinigen Trajektorie T2 von der Istposition IP zur Zielposition ZP verschoben werden kann.

Das Verschiebeobjekt Ov wird dann vom Reinigungsgerät 1 in einem weiteren Verschiebevorgang zur Zielposition ZP verschoben, insbesondere entlang der neuen Trajektorie T2.

Wenn der Verschiebevorgang abgeschlossen ist, wird in einem weiteren/zwölften Verfahrensschritt A12 überprüft, ob die Zielposition ZP erreicht wurde.

Dazu wird insbesondere anhand der Sensordaten überprüft, ob die Istposition IP des Verschiebeobjekts Ov mit der Zielposition ZP übereinstimmt.

Um die Istposition IP des Verschiebeobjekts Ov (präzise) zu bestimmen, kann das Reinigungsgerät 1 nach dem Schiebevorgang und/oder nach einer vordefinierten Strecke (erneut) anhalten und insbesondere auf einen vordefinierten Abstand zum Verschiebeobjekts Ov zurückfahren, insbesondere derart, dass das Verschiebeobjekt Ov vollständig im Erfassungsbereich des Sensors 9, 10 liegt, wie bereits erläutert und in Fig. 3F dargestellt.

Es ist jedoch auch möglich, dass die Istposition IP des Verschiebeobjekts Ov direkt oder indirekt beim Schiebevorgang bestimmt wird. Beispielsweise kann das Reinigungsgerät 1, insbesondere mittels der Navigationseinrichtung 4, bestimmen, ob die eigene Position mit derjenigen Position übereinstimmt, die das Reinigungsgerät 1 einnehmen müsste, damit sich das Verschiebeobjekt Ov an der Zielposition ZP befindet.

Ist dies nicht der Fall bzw. wenn die Istposition IP von der Zielposition ZP abweicht, wird vorzugsweise anschließend bzw. in einem weiteren/dreizehnten Verfahrensschritt A13 überprüft, ob die geplante Trajektorie T1 (weiterhin) dem nächsten Verschiebevorgang zugrunde gelegt werden soll oder insbesondere aufgrund der Abweichung zwischen der Istposition IP und der geplanten/ursprünglichen Trajektorie T1 bzw. T2 sich das Reinigungsgerät 1 neu relativ zum Verschiebeobjekt Ov ausrichten bzw. eine neue Vororientierungsposition VP bestimmt werden muss.

Für den Fall, dass die ursprüngliche/geplante oder bereits angepasste Trajektorie T1 bzw. T2 für den nächsten Verschiebevorgang verwendet werden kann bzw. dass die Istposition IP des Verschiebeobjekts Ov auf der geplanten/ursprünglichen oder bereits angepassten Trajektorie T1 bzw. T2 liegt, wird vorzugsweise ein weiterer Verschiebevorgang durchgeführt bzw. das Verschiebeobjekt Ov für eine vordefinierte Strecke bzw. entlang der Trajektorie T1 bzw. T2 bzw. in Richtung der Zielposition ZP verschoben.

Erreicht oder überschreitet die Abweichung zwischen der Istposition IP und der Trajektorie T1 bzw. T2 den vordefinierten Grenzwert bzw. ist das Verschiebeobjekt Ov von der Trajektorie T1 bzw. T2 abgekommen, richtet sich das Reinigungsgerät 1 erneut relativ zum Verschiebeobjekt Ov aus, insbesondere derart, dass das Verschiebeobjekt Ov durch eine geradlinige Bewegung bzw. entlang einer neuen geradlinigen Trajektorie T von der Istposition IP zu der Zielposition ZP verschoben werden kann, wie bereits anhand von Fig. 3C bis 3D erläutert.

Für den Fall, dass die Überprüfung ergibt, dass die Zielposition ZP erreicht ist, fährt das Reinigungsgerät 1 zurück zur Ausgangsposition AP, besonders bevorzugt insbesondere rückwärts bzw. entlang der zurückgelegten Trajektorie T1 bzw. T2.

Vorzugsweise wird anschließend bzw. in einem weiteren/vierzehnten Verfahrensschritt A14 der Reinigungsvorgang bzw. das Reinigen der Reinigungsfläche F fortgesetzt.

Insbesondere wird bzw. werden nach Erreichen der Zielposition ZP das Schiebeteil 12 erneut angehoben bzw. in die angehobene Position gebracht und/oder das Gebläse und/oder die Reinigungswalze aktiviert.

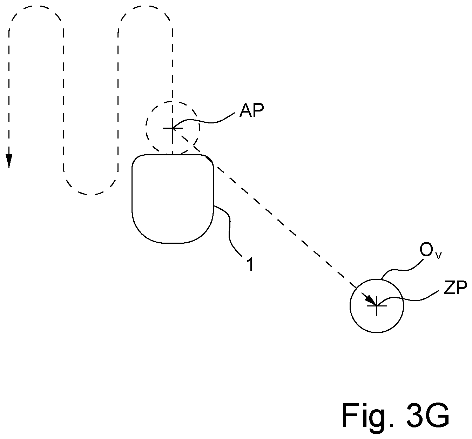

Wie in Fig. 3G dargestellt, wird vorzugsweise (zunächst) der Bereich der Ausgangsposition AP mittels des Reinigungsgeräts 1 gereinigt. Es ist jedoch auch möglich, dass das Reinigungsgerät 1 zunächst einen anderen Bereich der Reinigungsfläche F reinigt.

Optional ist vorgesehen, dass nach Reinigung der Reinigungsfläche F im Bereich der Ausgangsposition AP das Verschiebeobjekt Ov von der Zielposition ZP zurück zur Ausgangsposition AP verschoben wird, insbesondere in einem weiteren/fünfzehnten Verfahrensschritt A15. Vorzugsweise kommt hierfür das Verschiebemanöver entsprechend zur Anwendung, wobei die elektronisch gespeicherte Ausgangsposition AP als (neue) Zielposition ZP und die ursprüngliche Zielposition ZP als (neue) Ausgangsposition AP festgelegt werden.

Das vorschlagsgemäße Verfahren zeichnet sich zusammenfassend dadurch aus, dass insbesondere anhand vordefinierter Kriterien zunächst eine Zielposition ZP festgelegt und anschließend das Verschiebeobjekt Ov mittels des Reinigungsgeräts 1 zu der festgelegten Zielposition ZP verschoben wird. Bei dem Verschiebemanöver nimmt das Reinigungsgerät 1 vorzugsweise zunächst eine Vororientierungsposition VP ein, um anschließend das Verschiebeobjekt Ov entlang einer geradlinigen Trajektorie von der Ausgangsposition AP zu der Zielposition ZP zu verschieben. Weicht die Istposition IP des Verschiebeobjekts Ov von der Trajektorie T ab, wird ein Korrekturvorgang vorgenommen bzw. das Verschiebeobjekt Ov entlang einer neuen Trajektorie T2 verschoben.

Einzelne Aspekte, Merkmale und Verfahrensschritte bzw. -varianten der vorliegenden Erfindung können unabhängig voneinander, aber auch in beliebiger Kombination und/oder Reihenfolge realisiert werden.

### Bezugszeichenliste:

- 1: Reinigungsgerät
- 2: Gehäuse
- 3: Räder
- 4: Navigationseinrichtung
- 5: Datenverarbeitungseinrichtung
- 6: Steuereinrichtung
- 7: Kommunikationseinrichtung
- 8: Ansaugöffnung
- 9: erster Sensor
- 10: zweiter Sensor
- 11: Stoßfänger
- 12: Schiebeteil
- A1-A15: Verfahrensschritte
- AP: Ausgangsposition
- D: Datenbank
- E: Externes Kommunikationsgerät
- F: Reinigungsfläche
- F1: gereinigter Bereich
- F2: zu reinigender Bereich
- H: Hindernis
- IP: Istposition
- K: Karte
- Ou: zu umfahrendes Objekt
- Ov: Verschiebeobjekt
- P: Position
- Q: Sperrbereich
- R: Radius
- S: Sammelstelle
- T: Trajektorie
- T1: erste Trajektorie
- T2: zweite Trajektorie
- U: Benutzerschnittstelle
- VP: Vororientierungsposition
- ZP: Zielposition

## Patentansprüche

1. Verfahren zum Betreiben eines selbstfahrenden Reinigungsgeräts (1) zur Reinigung einer Reinigungsfläche (F),
wobei das Reinigungsgerät (1) autonom auf der Reinigungsfläche (F) navigiert,
**dadurch gekennzeichnet,**
**dass** während der Reinigung ein verschiebbares Verschiebeobjekt (Ov) auf der Reinigungsfläche (F) erkannt wird, und
**dass** das Reinigungsgerät (1) bei einem Verschiebeobjekt (Ov) automatisch ein Verschiebemanöver durchführt, wobei eine Zielposition (ZP) festgelegt und das Verschiebeobjekt (Ov) mittels des Reinigungsgeräts (1) zu der Zielposition (ZP) verschoben wird.

2. Verfahren nach Anspruch 1, **dadurch gekennzeichnet, dass** die aktuelle Position des Verschiebeobjekt (Ov) vor Durchführung des Verschiebemanövers als Ausgangsposition (AP) elektronisch gespeichert wird.

3. Verfahren nach Anspruch 1 oder 2, **dadurch gekennzeichnet, dass** die Zielposition (ZP) vor Durchführung des Verschiebemanövers festgelegt und elektronisch gespeichert wird.

4. Verfahren nach einem der voranstehenden Ansprüche, **dadurch gekennzeichnet, dass** die Reinigungsfläche (F) während der Reinigung in einen gereinigten Bereich (F1) und einen zu reinigenden Bereich (F2) unterteilt wird, wobei die Zielposition (ZP) nur im gereinigten Bereich (F1) festgelegt wird.

5. Verfahren nach einem der voranstehenden Ansprüche, **dadurch gekennzeichnet, dass** als Zielposition (ZP) eine Position festgelegt wird, die einen vordefinierten Mindestabstand zu einem Hindernis (H) aufweist und/oder die in einem vordefinierten Radius (R) um die Zielposition (ZP) frei von Hindernissen (H) ist.

6. Verfahren nach einem der voranstehenden Ansprüche, **dadurch gekennzeichnet, dass** bei mehreren ermittelten/möglichen Zielpositionen (ZP) diejenige Zielposition (ZP) festgelegt wird, die den geringsten Abstand zur Ausgangsposition (AP) aufweist.

7. Verfahren nach einem der voranstehenden Ansprüche, **dadurch gekennzeichnet, dass** insbesondere durch eine Nutzereingabe eine oder mehrere mögliche Zielpositionen (ZP), eine Sammelstelle (S) und/oder ein oder mehrere Sperrbereiche (Q) vorgegeben werden, in denen kein Verschiebemanöver durchgeführt wird und/oder in denen keine Zielposition (ZP) festgelegt wird.

8. Verfahren nach einem der voranstehenden Ansprüche, **dadurch gekennzeichnet, dass** bei nicht festlegbarer Zielposition (ZP) das Verschiebeobjekt (Ov) umfahren wird.

9. Verfahren nach einem der voranstehenden Ansprüche, **dadurch gekennzeichnet, dass** sich das Reinigungsgerät (1) für das Verschiebemanöver derart zum Verschiebeobjekt (Ov) positioniert, dass das Verschiebeobjekt (Ov) durch eine geradlinige Bewegung bzw. entlang einer geradlinigen, insbesondere hindernisfreien, Trajektorie (T) von der Ausgangsposition (AP) zur Zielposition (ZP) verschoben werden kann, vorzugweise wobei sich das Reinigungsgerät (1) mittig zum Verschiebeobjekt (Ov) positioniert.

10. Verfahren nach Anspruch 9, **dadurch gekennzeichnet, dass** während des Verschiebemanövers das Verschiebeobjekt (Ov) entlang der Trajektorie (T) optional mittels mehrerer Verschiebevorgänge bzw. mehrerer Vorwärts- und Rückwärtsbewegungen von der Ausgangposition (AP) zur Zielposition (ZP) verschoben wird.

11. Verfahren nach Anspruch 8 oder 9, **dadurch gekennzeichnet, dass** während des Verschiebemanövers überwacht wird, ob die Istposition (IP) des Verschiebeobjekts (Ov) von der Trajektorie (T) abweicht, und/oder dass sich das Reinigungsgerät (1) bei Erreichen oder Überschreiten eines vordefinierten Grenzwertes der Abweichung zwischen der Istposition (IP) des Verschiebeobjekts (Ov) und der Trajektorie (T) erneut derart zum Verschiebeobjekt (Ov) positioniert, dass das Verschiebeobjekt (Ov) durch eine gradlinige Bewegung bzw. entlang einer gradlinigen Trajektorie (T) von der Istposition (IP) zur Zielposition (ZP) verschoben werden kann.

12. Verfahren nach einem der voranstehenden Ansprüche, **dadurch gekennzeichnet, dass** nach Erreichen der Zielposition (ZP) das Reinigungsgerät (1) automatisch insbesondere rückwärts bzw. entlang der Trajektorie (T) zurück zur Ausgangsposition (AP) fährt.

13. Verfahren nach einem der voranstehenden Ansprüche, **dadurch gekennzeichnet, dass** nach Durchführung des Verschiebemanövers die Reinigungsfläche (F) im Bereich der Ausgangsposition (AP) gereinigt wird.

14. Verfahren nach einem der voranstehenden Ansprüche, **dadurch gekennzeichnet, dass** nach Reinigung der Reinigungsfläche (F) im Bereich der Ausgangsposition (AP) das Verschiebeobjekt (Ov) von der Zielposition (ZP) zurück zur Ausgangsposition (AP) verschoben wird.

15. Selbstfahrendes Reinigungsgerät (1) zur Reinigung einer Reinigungsfläche (F), wobei das Reinigungsgerät (1) eine Navigationseinrichtung (4), eine Datenverarbeitungseinrichtung (5) und eine Steuereinrichtung (6) aufweist, um autonom in einer Umgebung zu navigieren,
**dadurch gekennzeichnet,**
**dass** das Reinigungsgerät (1) zur Durchführung eines Verfahrens nach einem der voranstehenden Ansprüche ausgebildet ist.
